(19) Europäisches Patentamt

European Patent Office

Office européen des brevets

(11) Veröffentlichungsnummer: **0 599 263 A2**

(12) **EUROPÄISCHE PATENTANMELDUNG**

(21) Anmeldenummer: **93118802.3**

(22) Anmeldetag: **23.11.93**

(51) Int. Cl.5: **F16H 47/04**

(30) Priorität: **23.11.92 DE 4239302**
**08.05.93 DE 4315369**
**21.05.93 DE 4316988**
**01.06.93 DE 4318075**
**08.07.93 DE 4322789**
**21.10.93 DE 4335948**

(43) Veröffentlichungstag der Anmeldung:
**01.06.94 Patentblatt 94/22**

(84) Benannte Vertragsstaaten:

**AT DE FR GB IT SE**

(71) Anmelder: **Meyerle, Michael**
**Kiefernweg 9**
**D-88074 Meckenbeuren(DE)**

(72) Erfinder: **Meyerle, Michael**
**Kiefernweg 9**
**D-88074 Meckenbeuren(DE)**

(54) **Stufenloses hydrostatisch-mechanisches Leistungsverzweigungsgetriebe, insbesondere für Kraftfahrzeuge.**

㉗ Die Erfindung bezieht sich auf ein hydrostatisch-mechanisches Leistungsverzweigungsgetriebe, das ausgerüstet ist mit einer Einrichtung zur Überbrückung des hydrostatischen Wandlers an einem oder an mehreren Übersetzungsfestpunkten zur Verbesserung des Getriebe-Wirkungsgrades. Desweiteren ist das Getriebe ausgerüstet mit einer Steuer- und Regeleinrichtung, die den hydrostatischen Wandler 4 im Bremsbetrieb als Hydrostat-Retarder wirksam werden läßt, um sonst erforderliche kosten- und bauraumintensive Primär- oder Sekundär-Retarder einzusparen. Darüber hinaus besitzt die Erfindung weitere Einzelheiten zur Verbesserung des Geräusch- und Umweltverhaltens. Auch eine Einrichtung zur Bremsenergie-Rückgewinnung ist vorgesehen.

FIG. 4.

EP 0 599 263 A2

Die Erfindung bezieht sich auf ein stufenloses Getriebe, bevorzugt ein hydrostatisches Leistungsverzweigungsgetriebe und dessen Steuer- und Regeleinrichtung, insbesondere für Kraftfahrzeuge, nach dem Oberbegriff der Hauptansprüche. Das Getriebe erlaubt unterschiedliche Fahrstrategien bzw. Fahrprogramme, die bedienungsfreundlich einstellbar bzw. abrufbar sind. Desweiteren ist eine Hydrostatüberbrückung an mehreren Übersetzungspunkten schaltbar und die Bremsfähigkeit des Motors sowie höchstmögliche Bremswirkung über den stufenlosen hydrostatischen Wandler ist ausnutzbar und komfortabel steuerbar. Außerdem kann Bremsenergie in einer weiteren Ausgestaltungsform über den hydrostatischen Wandler rückgewonnen werden. Zur Schaltoptimierung der Bereichsschaltungen ist eine gezielte Verstellkorrektur des stufenlosen Wandlers vorgesehen.

Ähnliche Teil-Einrichtungen sind bereits bekannt. Sie erfordern jedoch größren Aufwand an Kosten, Gewicht und Bauraum.

Aufgabe der Erfindung ist es, diese Nachteile, insbesondere bei stufenlosen Getrieben, vorallem hydrostatitsch-mechanischen leistungsverzweigten Getrieben, zu beseitigen. Darüber hinaus sollen die Vorteile des stufenlosen Getriebes auch durch Verbesserung der aus der EP-A-0280 757 bekannten Einrichtungen besser ausnutzbar sein.

Diese Aufgabe wird erfindungsgemäß durch die in den Hauptansprüchen aufgeführten Merkmale gelost. Weitere vorteilhafte Ausgestaltungen der Erfindung gehen aus den Unteransprüchen und der Beschreibung hervor.

Die Erfindung wird an Ausführungsbeispielen anhand von Zeichnungen erläutert. Es zeigen:

| | |
|---|---|
| Figur 1 | Eine weitere Ausführung der Steuer- und Regelungseinrichtung für ein Getriebe mit mehreren Schaltbereichen. |
| Figur 2 | Getriebeaufbau mit Zugkraftverstärker. |
| Figur 3 | System-Darstellung des Summierungs-/Verzweigungsgetriebes. |
| Figur 4 | Getriebeaufbau mit hydrostatischer Bremseinrichtung |
| Figur 5 | Getriebe mit Einrichtung zur Bremsenergie-Rückgewinnung. |
| Fig. 6a u. 6b | einen Wählhebel, insbesondere zur Vorwahl der Fahrtrichtung bei einem stufenlosen Getriebe, der einen oder mehrere Betätigungstasten zur Ein- und Ausschaltung eines Overdrive-Bereiches und / oder zur Einstellung einer Konstantgeschwindigkeit bzw. einer Konstantübersetzung besitzt. |
| Fig. 6c | Weitere Alternative der Betätigungseinrichtung, bei der die Betätigungstasten am Lenkrad angeordnet sind. |
| Fig. 6d u.6e | Diagramme, die den Verlauf der Einstellung zur Festlegung einer Konstantgeschwindigkeit bzw. Konstantübersetzung in Abhängigkeit zur Einstellzeit "t" bzw. zum Einstellweg "s" aufzeigen. |
| Figur 6f | Verbrauchskennlinie |
| Figur 6g | Diagramm Beschleunigungscharakteristik |
| Figur 6h | Diagramm Bremsanteile |
| Fig. 6i u. 6k | Diagramm Fahrregelung |
| Fig. 7 u. 7a | Verstell-, Drehzahl-, Drehmoment-, Druckverlauf während eines Schaltablaufes. |
| Figur 8 | Schaltplan |

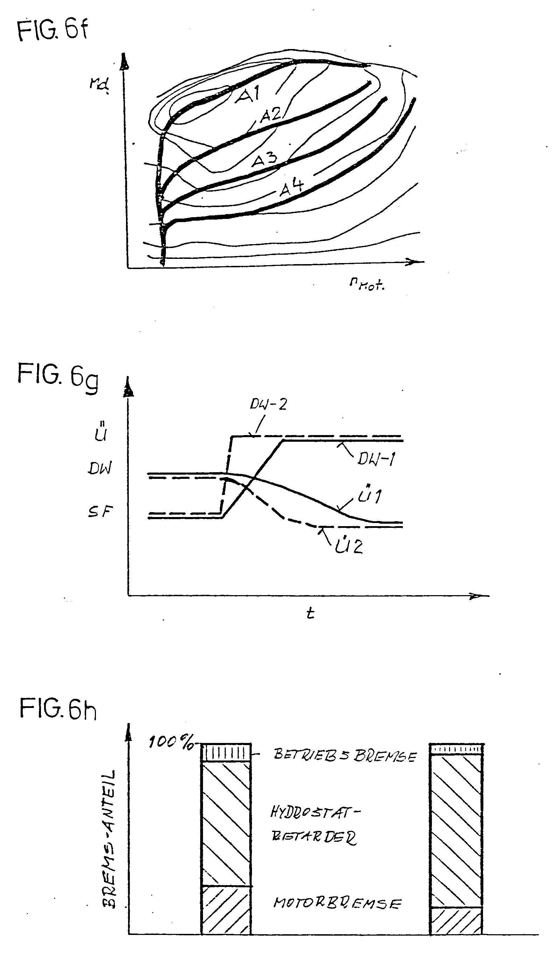

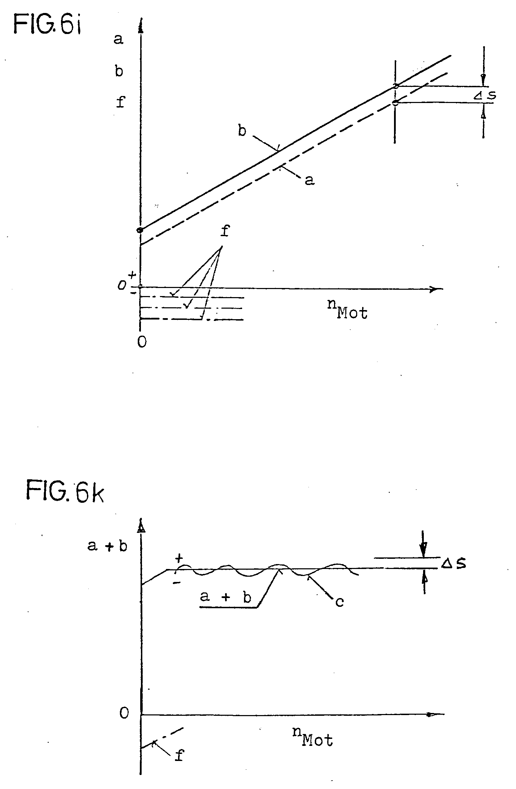

Wie aus der europäischen Patentanmeldung 0 280 757 bereits bekannt, ist eine Fahrprogramm-Vorwahl - Overdrive-Bereich oder leistungsorientiertes Programm - über das Fahrpedal oder Betätigungseinrichtungen im Bereich des Gaspedales für eine Fußbetätigung möglich. Ähnlich obengenannter bekannter Steuer- und Regeleinrichtung benutzt die Erfindung die Bewegungsgeschwindigkeit des Gaspedals 6 als Einflußgröße oder Steuerimpuls für den Abruf eines oder mehrerer der einprogrammierten Fahrprogramme. Ein kurzes, schnelles Antippen des Gaspedals gibt der Steuereinrichtung 5 den Befehl zum Abruf des entsprechenden leistungsorientierten Programms, wodurch der Motor in seiner Drehzahl angehoben wird, z.B. zur Vorbereitung auf einen Überholvorgang. Es können ein oder auch mehrere Programme (A1; A2; A3; A4 - Fig. 6f) vorgesehen werden, um den unterschiedlichen Fahrertypen bzw. den unterschiedlichen Fahreransprüchen gerecht zu werden.

Die Erfindung sieht desweiteren eine stufenlose Verschiebung eines einprogrammierten Fahrprogrammes bzw. einer Kennlinie A1 vor, die in Abhängigkeit zur Gaspedal-Stellgeschwindigkeit sich innerhalb des Verbrauchs-kennfeldes zwischen einer verbrauchsoptimalen A1 und einer maximalen leistungsorientierten Linie A4 stufenlos verschiebt. Durch die stufenlose Übersetzungsregelung ist hier eine nahezu optimale Anpassung an die verschiedensten Fahrerforderungen erfüllbar. Das vorerwähnte Fahrprogramm innerhalb einer unteren und einer oberen Grenze ist auch manuell vorwählbar. Auch stufenweise programmierbare Einzelprogramme A2; A3; A4 sind sinnvoll verwirklichbar.

Die Bedienungseinrichtung in diesen oben erwähnten Formen erlaubt eine weitgehende individuelle Fahrweise. Der Fahrer kann hier auf einfache Weise entsprechend seinem Wunsch bzw. entsprechend den gegebenen Fahrverhältnissen sehr schnell eine gewünschte Getriebeübersetzung vorwählen, die, wie erwähnt, einer verbrauchs-orientierten Funktion oder einer leistungsorientierten, sportlichen Funktion entspricht. Zum Beispiel für die Vorbereitung auf einen Überholvorgang hat der Fahrer die weitere Möglichkeit, zunächst den Overdrive-Bereich auszuschalten und gegebenenfalls mit derselben vorgenannten Betätigungseinrichtung über Handbetätigung oder durch kurzzeitiges einmaliges oder gegebenenfalls mehrmaliges Gaspedaldurchtreten bzw. -antippen - oder auch eine Einrichtung für seitliche Fußbewegungsimpulse sind denkbar - auch noch eine weitere Übersetzungsrückstellung zu bewirken, indem die Motordrehzahl weiter angehoben wird, so daß zu Beginn des Überholvorganges hohe bis höchstmögliche Motorleistung schnell zur Verfügung steht. Um ein Übertouren des Motors bei obengenannter weiterer Übersetzungsrückstellung zu verhindern, ist erfindungsgemäß eine automatische bzw. eine dem jeweiligen Betriebszustand angepaßte Rückstellbegrenzung einprogrammiert. Bevorzugt ist hierbei eine der Betriebssituation angepaßte optimale Grenzmotordrehzahl festgelegt. Die Festlegung dieser Grenzdrehzahlpunkte kann eine Grenzdrehzahllinie darstellen, die aus Aspekten des Motordrehzahlgeräusches oder/und der möglichen Motorbeschleunigungsfähigkeit des jeweiligen Motors resultiert. Die Steuer- und Regeleinrichtung für das Getriebe selbst ist hier zweckmäßigerweise so ausgebildet, daß nach Abschluß des Überholvorganges automatisch das verbrauchs-orientierte Programm wirksam wird und der Motor wieder auf der verbrauchsgünstigen Linie fährt. Diese Funktion kann dementsprechend,z.B. zeit- oder/und last- oder von der Gaspedalstellung dynamisch abhängig vorprogrammiert werden. Wünscht der Fahrer ein längeres Verharren im Sportprogramm, so ist es möglich, ein entsprechendes Sportprogamm abzurufen durch eine separate oder gemeinsame Betätigungseinrichtung. Die Drucktaste "S" kann zu diesem Zweck mit zwei Raststellungen versehen sein, wobei die eine Raststellung für einen einmaligen Beschleunigungsvorgang und die zweite Raststellung für ein festes Sportprogramm vorgesehen ist.

Die Erfindung zeichnet sich besonders dadurch aus, daß die automatisch wirksamen Signale zur Erkennung von Bergfahrt, Talfahrt, Kurvenfahrt, Beschleunigungs-, Verzögerungsfahrt und Winterbetrieb eine automatische, gezielt angepaßte stufenlose Übersetzungs-Änderungsgeschwindigkeit bewirken.

Im Hinblick auf eine komfortablen kontinuierlichen Beschleunigung-Ablauf, sowohl hinsichtlich der Beschleunigungs-Leistung als auch des Geräuschverhaltens, ist erfindungsgemäß eine den unterschiedlichen Fahrertypen gerechtwerdende angepaßte Rückstelldämpfung bzw. Verzögerungseinrichtung für die Übersetzungsrückstellung im Beschleunigungsvorgang vorgesehen, die in Abhängigkeit zur jeweiligen Motorbeschleunigung eine angepaßte Getrieberückstellung zuläßt, so daß der Motor unter dauernder kontinuierlicher Drehmomentbelastung hochdrehen kann. Dies kann zum einen über eine im Steuergerät einprogrammierte, den verschiedenen Fahrpedal-Verstellcharakteristiken bzw. Fahrer-Charakteristiken angepaßter Dämpfungseffekt, oder/und über ein über das Hydrostatdrucksignal oder/und über ein, z.B. von der Motorlast abhängigen Signalgröße einprogrammiertes Verzögerungssignal realisiert werden. In Fig. 6g ist die entsprechende Verstellcharakteristik bzw. Übersetzungs-Änderung Ü1; Ü2 bei langsamer Gasbewegung und Drosselklappenverstellung DW1 und schneller DW2 dargestellt.

Die Erfindung sieht also im einzelnen eine Steuer- und Regeleinrichtung vor, die eine automatische stufenlose Übersetzungsanpassung an unterschiedlichste Fahr- und Betriebssituationen ohne zusätzlichen Fahrereingriff ermöglicht, wobei Fahrkomfort, Fahrsicherheit, Fahrleistung, Kraftstoffverbrauch im hohen Maße Berücksichtigung finden. Hierzu ist insbesondere die richtige Übersetzungsanpassung und die Änderungsgeschwindigkeit der stufenlosen Übersetzung bei den jeweiligen Fahr- und Betriebszuständen von entscheidender Bedeutung. Die Steuer- und Regeleinrichtung wird hierzu beeinflußt durch Verstellgeschwindigkeit des Gaspedals, durch Drehzahl-Differenzwerte der Hinter- und Vorderräder oder/und Signale aus dem Fliehkraftverhalten des Fahrzeugs, z.B. bei Kurvenfahrt. Weitere Signale für die Beeinflußung der Übersetzungsänderung können lastabhängige Signale, z.B. das Hydrostat-Drucksignal d oder/und Gaspedal- oder Drosselklappen-Stellungssignal sein. Für Kurvenfahrt sieht die Erfindung, je nach Größe der Querbeschleunigung, eine mehr oder weniger große Dämpfung bis Blockierung der stufenlosen Übersetzungsänderung vor, das heißt zu schnelle Übersetzungsänderung nach oben wird unterbunden durch den Einfluß der aus der Querbeschleunigung resultierenden Signale.

Bei Bergfahrten wird unangenehmes Hoch- und Rückregeln durch Erkennen der Bergauffahrt aus dem Lastsignal - Hydrostat-Drucksignal oder/und Gaspedalstellungs-Signal und der Fahrgeschwindigkeit oder/und aus dem allgemeinen Beschleunigungsverhalten.

Für Bergabfahrt ist eine Übersetzungssperre eingebaut, die in Abhängigkeit zum Bremspedal oder/und aus der Erkennung des Schubbetriebes aktiviert wird. Über das Bremspedal wird die gewünschte Geschwindigkeit eingestellt, die nach Loslassen des Pedals aufrechterhalten bleibt und ähnlich einem Tempomat wirksam wird, wobei vorrangig die Motorbremse bis zum Erreichen einer definierten Motordrehzahl wirksam wird. Kann die nun vorgewählte Fahrgeschwindigkeit über die Motorbremse nicht gehalten werden, was durch zu hohes Motorhochtouren signalisiert wird, so kann durch Zuschalten der Betriebsbremse durch erneute Bremsbetätigung eine weitere stufenlose Übersetzungs-Rückstellung und Senkung der Fahrgeschwindigkeit bewirkt werden. Beim Gasgeben wird die Übersetzungssperre in Abhängigkeit zur Gaspedal-Stellgeschwindigkeit kontinuierlich mehr oder weniger schnell in Richtung stufenloser Übersetzungshochschaltung gelöst.

Die Steuerung kann desweiteren so ausgebildet werden, daß auch bei Talfahrt ohne Betriebsbremsung, das heißt ohne Bremsabnützung gefahren werden kann und zwar über reine Motorbremsung, wodurch eine automatische Geschwindigkeitsanpassung bzw. Übersetzungs-Anpassung in Abhängigkeit zum Straßenprofil durch entsprechende Regelung über das Motordrehzahl-Signal realisiert wird.

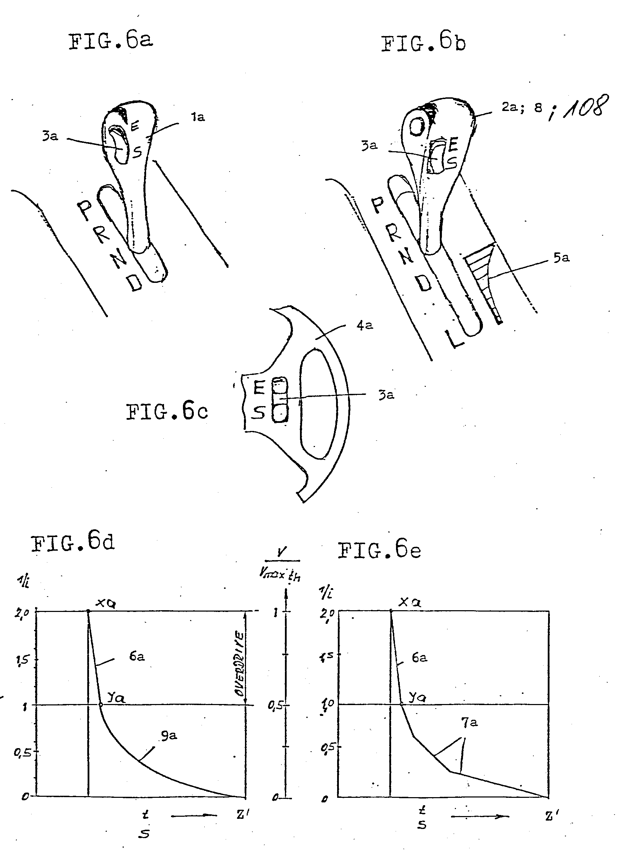

Die Erfindung sieht zur feinfühligen, exakten Einstellbarkeit einer zu wählenden Konstantgeschwindigkeit vor, daß die Einstellgeschwindigkeit bis zum Erreichen der gewünschten Konstantgeschwindigkeit oder Konstantübersetzung im höheren Geschwindigkeits- bzw. Übersetzungsbereich 1/i eine schnelle Verstelländerung und bei niedriger Geschwindigkeit eine langsame Veränderung der Übersetzung bewirkt. Insbesondere im unteren Geschwindigkeitsbereich ist eine Feineinstellung sehr wichtig, um z. B. eine bestimmte Kriechgeschwindigkeit einhalten zu können, wie dies bei Traktoren erforderlich ist. Wie in Figur 6b aufgezeigt, ist in dem hohen Geschwindigkeitsbereich eine schnelle, bevorzugt lineare Rückstellung bis Erreichen eines Übersetzungspunkt "Ya" und ab dem Punkt "Ya" bis "Za" eine immer langsamer werdendere Verstellung in bezug auf die Verstellzeit oder den Verstellweg gegeben. Hierdurch ist gewährleistet, daß

kleinste Geschwindigkeiten bzw. Kriechgeschwindigkeiten feinfühlig und genau einstellbar sind. Die Einstellung nach Fig. 6d entspricht hier einer kontinuierlich verlaufenden Linie 9a. Nach Figur 6e wird ein anderer Verlauf über drei immer flacher werdenden Geraden 6a, 7a, 8a realisiert.

Diese Einstellcharakteristiken, wie in Fig. 6d und 6e aufgezeigt, können elektronisch oder über mechanische Elemente, z. B. über Kurvenscheiben oder bekannte Hebel-/ Wegeinrichtungen realisiert werden. Der Einstellhebel kann ein separater Hebel oder sinngemäß auch der Wählhebel 1a, 2a sein. Ein Einstellsymbol 5a gibt eine Orientierung für die Einstellgröße. Zwischen-Einrastungen des Einstellhebels 1a, 2a können in manchen Fällen für eine Groborientierung vorteilhaft sein. vorteilhaft ist auch eine digitale, über manuelle Betätigung einstellbare Anzeige auf der Instrumententafel.

Die Bedienungselemente - Taste 3a oder Einstellhebel - können an beliebiger Stelle im Fahrzeug angeordnet werden. Zu bevorzugen ist hierbei die Anordnung der Betätigungselemente, in bekannter Weise, am Wählhebel 1a, 2a, wie z. B. in Fig. 6a und 6b dargestellt oder auf der Mittelkonsole. Auch die Anordnung der Bedienung am Lenkrad, Fig. 6c, kann als bedienungsfreundlich angesehen werden.

Die Bedienungselemente sind in beliebiger Ausführungsform als Drucktasten oder Wippschalter für die Vorwahl des Overdrive-Bereiches bzw. für den oberen Übersetzungsbereich und für das Ausschalten des Overdrive-Bereiches und gleichzeitig für die Einstellung einer Konstantgeschwindigkeit bzw. einer Konstantübersetzung ausführbar.

Für den Winterbetrieb sieht die Erfindung ein Fahrprogramm vor, das ein Durchrutschen dadurch vermeidet, daß der Hydrostatdruck durch einen Druckregler oder ein Bypaßventil 114c; 216 automatisch moduliert wird, wobei das entsprechende Regelsignal 113 resultiert aus einem oder mehreren der Betriebs-Signale wie Drehzahlsignal b oder/und Getriebe-Übersetzungssignal oder/und manuelles Betätigungssignal oder/und eine Differenzsignal aus Drehzahlsignal b und Gaspedalsignal a oder/und Drosselklappen-Stellungssignal DW. Die Information für die Steuerung wird aus dem Reifenschlupf-Verhalten oder/und unterschiedlichen Raddrehzahlen und Drehzahldifferenzen ermittelt und signalisiert, wodurch automatisch die Druckregelung zu einer angepaßten Druckmodulation wechselt. Hierzu sind vorteilhaft und kostengünstig die bereits im ABS-Bremssystem vorhandenen Signalgeber verwendbar. Entsprechend dem Fahrwiderstand bzw. der Bodenhaftung wird automatisch der Hydrostatdruck als Maß für die zulässige Triebkraft erkannt und entsprechend moduliert. In einer vereinfachten Ausführung kann auch durch ein Signal aus der Gaspedalbewegung bzw. -stellung eine mehr oder weniger gezielte Druckmodulation für den Hydrostatdruck erzeugt werden, derart, daß z.B. das vorgenannte Druckregelventil oder Bypaßventil, das die beiden Arbeitsdruckleitungen - Hochdruck, Niederdruck - miteinander unter angepaßtem Drosseleffekt kurzschließt und über die Steuerleitung 217 durch die Gaspedalbewegung den Arbeitsdruck und somit die Triebkraft moduliert.

Abhängig von der Art des Fahrzeuges und seinen spezifischen Einsatzforderungen sind verschiedene Fahrregelungen bzw. Fahrprogramme vorgesehen. Die Einsatzart von Arbeitsmaschinen, z.B. des Traktors, fordert ein Programm zur verbrauchsorientierten Regelung, das insbesondere für den Transportbetrieb oder alle Einsatzarten auf dem Feld ohne Zapfwellenbetrieb mit Geschwindigkeitslimitierung sinnvoll ist. Durch die Vorwahl dieses Programmes arbeitet der Motor vorwiegend auf der Verbrauchsbestlinie des Motors. Für eine leistungsorientierte Regelung hingegen ist ein Programm vorgesehen, das in erster Linie auf optimale Leistungsausnutzung des Antriebsmotors ausgerichtet ist. Hierbei ist es möglich, das Fahrzeug mit einer zusätzlichen Einrichtung auszustatten, die es erlaubt, eine vorwählbare Obergrenze der Motordrehzahl festzulegen, um z.B. unangenehme Motordrehzahlgeräusche oder auch erhöhten Getriebemotorverschleiß zu vermeiden. Diese Einrichtung ist auch geeignet für den Bremsbetrieb bei Befahren längerer Gefällstrekken, wobei die optimale Bremsfähigkeit des Motors ausnutzbar ist. Über das Motordrehzahlsignal wird hierbei zweckmäßigerweise die Getriebeübersetzung entsprechend angepaßt, wie später genauer beschrieben.

Für den Zapfwellenbetrieb ist beim Traktor normalerweise eine bestimmte Konstant-Motordrehzahl erforderlich. Bei Vorwahl dieses Zapfwellenbetriebes wird, gemäß der Erfindung, automatisch mit der Betätigung der Zapfwellenkupplung bzw. Zapfwellenschaltung auf Konstant-Motorregelung (RQV) geschaltet. Die Fahrgeschwindigkeit kann entsprechend den Fahrwiderständen und im Rahmen des bei dieser Motordrehzahl gegebenen Leistungsangebotes automatisch oder auch über eine entsprechende Handverstellung angepaßt werden.

Für alle genannten Fahrprogramme - verbrauchsorientierte Regelung, leistungsorientierte Regelung, Konstant-Motorregelung für Zapfwellenbetrieb - ist, wie erwähnt, eine separate Betätigungseinrichtung, bevorzugt bei Traktoren eine Druckknopfschaltung vorgesehen. Die entsprechenden Signale für die Erfüllung der erforderlichen Funktionen werden, wie nachfolgend näher beschrieben, vorzugsweise in einem elektronischen Steuergerät auf bekannte Weise verarbeitet. Der Motor besitzt hierbei vorzugsweise einen Regler, der sowohl eine Leistungsregelung -RQ-Regelung - als auch eine Motordrehzahlregelung oder Alldrehzahlregelung - RQV-Regelung - besitzt, wobei z.B. bei Vorwahl des verbrauchsorientierten Betriebes bzw. Transportbetriebes der bekannte RQ-Regler und der Vorwahl des Zapfwellenbetriebes der bekannte RQV-Regler anspricht. Eine derartige Motorregelung wird in der Zeitschrift "Automobilindustrie" 5/86 Seite 653 unter dem Titel "Elektronische Dieselregelung EDR für Nutzfahrzeugmotoren" näher beschrieben. Auch bei Vorwahl der leistungsorientierten Regelung (RQV) ist innerhalb gewisser Grenzen der Betrieb auf der Verbrauchsbestlinie möglich, wobei jedoch ein Betriebsprogramm vorgesehen ist, das in Abhängigkeit der jeweiligen Betriebszustände die Einhaltung der Motordrehzahl in vorgegebenen Grenzen, wie später genauer beschrieben, vorschreibt.

Einzelheiten der Steuerung/Regelung sind nachfolgend näher beschrieben und führen teilweise zu Verbeserungen der Einrichtungen gemäß der europäischen Patentanmeldung 0 280 757.

Für den Zapfwellenbetrieb des Traktors besteht die Forderung konstanter Motordrehzahl, wie bereits erwähnt. Um dies zu ermöglichen, wird in der Regel ein Motor mit Drehzahlregelung - RQV-Regler - verwendet. Bei Vorwahl einer bestimmten Arbeitsgeschwindigkeit muß bei Überschreiten der Leistungsgrenze des Motors bei dieser Geschwindigkeit eine Übersetzungsänderung möglich sein. Gemäß der Erfindung ist hierbei in Kombination mit der RQV-Motorregelung eine zusätzliche Regeleinrichtung vorgesehen, die die genannte Übersetzungsanpassung ermöglicht. Jeder Gaspedalstellung ist eine bestimmte Motor-Drehzahlgröße zugeordnet. Hierzu ist, wie in Fig. 6i dargestellt, ein vom Gaspedal bzw. Handgasstellung abhängiges Signal a gegeben, das z.B. parallel zum Motordrehzahlsignal b verläuft und um eine Differenzgröße $\Delta s$ kleiner ist als das genannte Motordrehzahlsignal. Wenn nun bei einer vorgewählten Übersetzungseinstellung eine lastabhängige Drückung der Motordrehzahl erfolgt, wird das Motordrehzahlsignal b kleiner als das Gaspedalsignal a , wodurch automatisch ein Signal zur Vergrößerung der Getriebeübersetzung ausgelöst wird, so daß die Motorbelastung und auch die Fahrgeschwindigkeit entsprechend verringert wird. Über einen Vergleich des Motordrehzahlsignals b und des Fahrpedalwegsignals a wird die Getriebeübersetzung automatisch angepaßt. Das Gaspedalsignal ist also immer kleiner als das Motordrehzahl-Signal. Wird nun, z.B. bei normalem Fahrbetrieb ohne fester Geschwindigkeits- und Drehzahllimitierung durch Gasgeben das Motordrehzahl-Signal überschritten, so neigt das Getriebe automatisch nach Art eines Kick-down-Effekts zu einer Übersetzungsrückstellung, so daß der Motor möglichst rasch seine neue Drehzahl einnehmen kann. Im Hinblick auf ein komfortables Fahrverhalten wird auch hier, ähnlich wie bei der RQ-Regelung, das Gaspedal-Signal korrigiert und in verzögerter Form in das Steuergerät eingegeben. Je nach der Dynamik der Gaspedalverstellung, ist der Verzögerungseffekt in unterschiedlicher Größe programmiert, das heißt entsprechend angepaßt. Für das Anfahrverhalten mit RQV-geregeltem Motor sieht die Erfindung verschiedene Funktionen vor. Beim Anfahren wird zweckmäßigerweise, wie ansich bei Automatgetrieben bekannt, die Fahrtrichtungsvorwahl über den Wählhebel 108; 1a bei getretener Bremse 7 vorgenommen. Das Bremssignal f bewirkt eine Verringerung des für den Anfahrbereich vergrößerten Motordrehzahl-Signals um einen Wert, der dem Übersetzungszustand "unendlich" bzw. Fahrzeugstillstand entspricht. Bei Loslassen der Bremse kommt das für den Anfahrzustand vergrößerte Motordrehzahl-Signal b zur Wirkung, wodurch eine Übersetzungsveränderung für den Anfahrvorgang ausgelöst wird. Eine weitere Möglichkeit für die Anfahrfunktion kann ein im Anfahrbereich wirkendes, zwischen die beiden Arbeitsdruckleitungen geschaltetes Bypaßventil 144c, das auch für das Winterprogramm dient, erfüllen, das über das Bremspedal und die entsprechende Steuerleitung 113 geöffnet und bei Loslassen der Bremse allmählich geschlossen wird. Auch über das Gaspedal ist es möglich, das Bypaßventil 114c anzusteuern, wodurch beim Gasgeben die Bypaßfunktion kontinuierlich ausgeschaltet wird. Auch eine einstellbare oder steuerbare Verstellsperre der Hydrostatverstellung kann bei Fahrzeugstillstand die Übersetzungsendstellung fixieren. Im Hinblick auf ein sicheres Anfahrverhalten ist es zweckdienlich, die Steuer- und Regeleinrichtung so zu programmieren, daß die Vorwahl der Fahrtrichtung nur bei getretener Bremse möglich ist, das heißt, daß nur bei Wirkung des entsprechenden Bremssignals f die erste Bereichskupplung schaltbar ist.

Diese Steuerungsart ist auch vorteilhaft für die normale Fahrregelung geeignet, wobei weder Motordrehzahl noch Getriebeübersetzung vorgewählt sind. Jeder Gaspedalstellung ist hierbei eine bestimmte Motordrehzahl und ein Motordrehmoment, entsprechend der Vollast-Drehmomentkurve, zugeordnet. Die Vollast-Drehmomentkurve entspricht gleichzeitig auch der Verbrauchsbestkurve des Motors, wodurch gleichzeitig ein wirkungsgradgünstiger Gesamtbetrieb erzielt wird. Über das Gaspedal wird durch das Motordrehzahl-Signal und das Gaspedal-Wegsignal automatisch über die Regeleinrichtung die Getriebeübersetzung eingestellt, die der Vollast bei dieser Gaspedalstellung und der durch die RQV-Regelung vorgegebenen Motordrehzahl entspricht. Gaspedal-Wegsignal und Motordrehzahl-Signal halten sich hierbei die Waage über die automatische Übersetzungsanpassung. Im Hinblick auf ein angenehmes Beschleunigungsverhalten ist zu berücksichtigen, daß beim Gasgeben keine zu rasche Übersetzungs-änderung in Richtung größere Übersetzung erfolgt, um unangenehmes Motorhochtouren zu verhindern. Für diesen Zweck ist entweder im Gaspedal-Wegsignal oder/und in der Getriebeverstell-Einrichtung oder/und im Motordrehzahl-Signal eine entsprechende Verzögerungseinrichtung einprogrammiert bzw. vorgesehen, die ein komfortables Geräuschverhalten des Motors in der Beschleunigungsphase sicherstellt.

Diese vorbeschriebene Steuerungsart ermöglicht also auch bei RQV-Motorregelung eine komfortable automatische Fahrregelung.

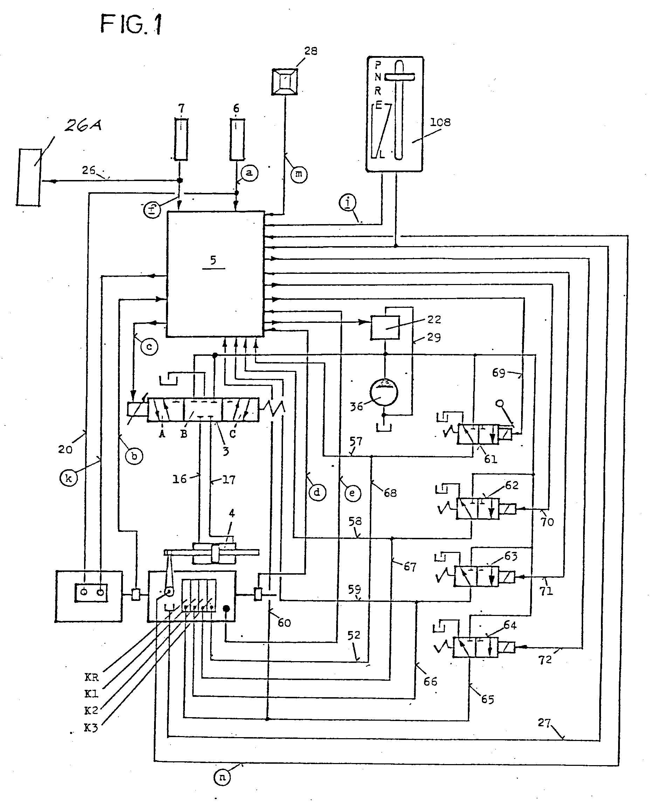

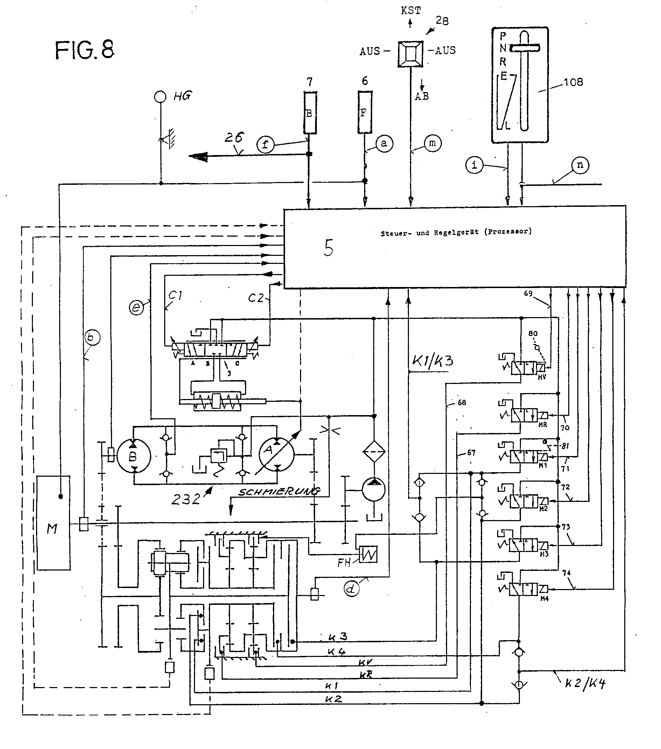

Wie aus Figur 1 ersichtlich, ist die Getriebeverstellung über ein aus zwei oder mehreren Betriebssignalen, insbesondere Motordrehzahl-Signal b und Gaspedalsignal a bzw. Drosselklappenwinkel DW resultierendes Signal c oder über eine sogenannte EP-Verstellung, gemäß Figur 8, mit zwei Eingangssignalen C1 und C2 zur Verstellung des Hydrostatgetriebes möglich. C1 und C2 sind elektrische Größen, die auf einer elektrischen Verstellung mit Proportionalmagnet wirken und in proportionaler Abhängigkeit zur Verstellgröße des Hydrostaten stehen.

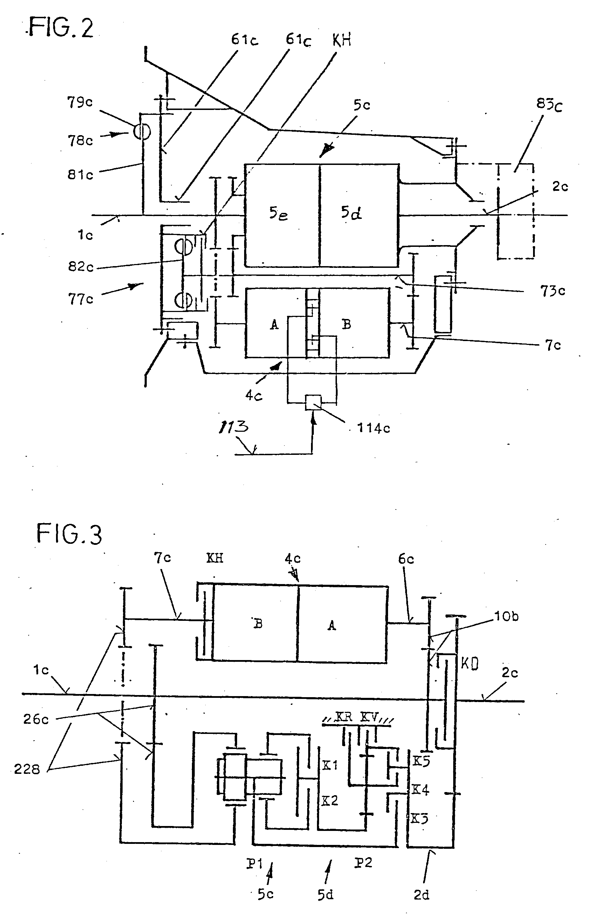

Die Erfindung betrifft desweiteren ein Kraftfahrzeuggetriebe, insbesondere mit Leistungsverzweigung, das aus einem stufenlosen Wandler 4c, gemäß Figur 2; 3; 4; 5, bevorzugt einem hydrostatischen Wandler, der aus einer ersten und einer zweiten Hydrostateinheit besteht, wobei beide Einheiten bevorzugt eine gemeinsame Baueinheit bilden und Antrieb oder/und Abtrieb des stufenlosen Wandlers 4c, je nach Ausführungsform, über Direktantrieb oder über zwischengeschaltete Triebräder erfolgt. Die Leistung wird eingangsseitig aufgeteilt in zwei Leistungszweige, wobei ein Leistungszweig über den stufenlosen Wandler fließt und vor dem Getriebeausgang wieder gegebenenfalls in einem Summierungsgetriebe 5c mit dem anderen Leistungszweig aufsummiert wird. Leistungsverzweigungsgetriebe bestehen aus einem oder mehreren Schaltbereichen. Die Schaltung von einem in den anderen Bereich erfolgt vorzugsweise an jeweils einem End-Verstellpunkt des Hydrostaten, wobei innerhalb der Schaltphase die Verstellgröße, mit Ausnahme eventueller geringfügiger Verstellkorrekturen, unverändert bleibt. So wird zum Beispiel bei einem 4-Bereichsgetriebe, wie in Figur 3 dargestellt, der Hydrostat über den gesamten Übersetzungsbereich viermal von einem Verstellmaximum zum anderen Verstellmaximum durchfahren. Bei diesem Getriebe nach Fig. 3 ist im Anfahrzustand bei geschlossenen Kupplungen K5 und KV und nach Schließen der Kupplung 1 der Hydrostat auf seine maximale negative Verstellgröße eingestellt. Zum Anfahren wird nun der Hydrostat zurückgeschwenkt auf "Null" und darüber hinaus bis zu seinem anderen Verstellende, positives Verstellmaximum, wo am Ende des ersten und zu Beginn des zweiten Schaltbereiches bei Synchronlauf aller Kupplungsglieder der zweite Bereich durch Schließen der Kupplung K2 und Öffnen der Kupplung K1 der zweite Bereich geschaltet ist. Nun wird der Hydrostat wieder zurückgeregelt innerhalb des zweiten Schaltbereiches bis auf "Null" und darüber hinaus bis zu seinem negativen Verstellmaximum, um den dritten Schaltbereich durch Schließen der Kupplung K3 und Öffnen der Kupplung KV zu schalten. Der dritte Bereich wird nun wiederum durch Rückregelung des Hydrostaten durch "Null" und weiter bis zu seinem positiven Verstellmaximum, wo am Ende des dritten Schaltbereiches nun bei Synchronlauf die Kupplung K4 und Öffnen der Kupplungen KV und K3 der vierte Bereich geschaltet wird. Durch Rückregelung des Hydrostaten bis zum entgegengesetzten Verstellmaximum, entsprechend negativem Verstellende, des Hydrostaten wird der Hydrostat zum letzten mal voll durchfahren bis Erreichen des Übersetzungsendpunktes des Getriebes. Der mechanische Leistungsanteil wird bei diesem Getriebe über Stirnradstufen 26c und der hydrostatische Leistungsanteil über die Zahnradstufe 10b, den hydrostatischen Wandler 4c und den Triebstrang 7c mit Zahnradstufe 228 auf das Summierungsgetriebe 5c geleitet. Das Summierungsgetriebe ist hier als mehrwelliges Planetengetriebe P1 ausgebildet, in dem die mechanische und hydraulische Leistung aufsummiert wird. Im ersten und im zweiten Schaltbereich fließt die mechanische und hydraulische Leistung über den zweiten Planetentrieb P2 bei geschlossener Kupplung KV. Für den Rückwärtsbereich wird der erste und der zweite Schaltbereich durch Schließen der Kupplung KR ermöglicht, indem die Drehrichtung im Planetentrieb P2 umgekehrt wird.

Das jeweils erwähnte Verstellmaximum des Hydrostaten definiert den Punkt, an dem die Schaltung in den nächsten Fahrbereich erfolgt, der nicht unbedingt das Verstellende des Hydrostaten sein muß, sondern auch etwas davor liegen kann, um zum Beispiel lastabhängigen Schlupf des Hydrostatgetriebes ausgleichen zu können. Auch ist unter Synchronlauf der zu schließenden Kupplungselemente nicht absoluter Synchronlauf sondern der Synchronlaufbereich definiert, der auch gewollte oder nicht gewollte Synchronlauffehler beinhalten kann, die durch die Schalt- bzw. Bereichskupplungen überbrückt bzw. noch aufgenommen werden können.

Getriebe dieser Art sind nach DE 40 27 724, DE 41 06 746 und PCT/DE 89 00 586, die mit Bestandteil dieser Erfindung sind, näher beschrieben. Die Erfindung stellt unter anderem eine verbesserte Ausgestaltung dieser bekannten Getriebe dar.

Zur Verbesserung des Wirkungsgrades, des Geräuschverhaltens oder/und zur Schaffung einer wirksamen integrierten Bremsanlage sieht die Erfindung unter anderem vor, einen oder mehrere hydrostatisch-leistungslose Betriebspunkte, insbesondere Übersetzungsfestpunkte, zu realisieren. Zu diesem Zweck wird der Hydrostat an einem oder an mehreren Betriebspunkten, die insbesondere in Hauptbetriebsbereichen liegen, durch entsprechend ausgebildete Einrichtungen abgeschaltet bzw. überbrückt, um diesen in leistungslosen Zustand zu versetzen. Diese Abschalt- bzw. Überbrückungseinrichtung wird in Form einer Hydrostat-Sperreinrichtung KH oder/und einer Bereichsblockschaltung oder/und einer Stabilisierungseinrichtung KD mit oder ohne Direkt-Durchtrieb ohne Hydrostatleistungsanteil realisiert.

Desweiteren ist das Getriebe mit einer Bremseinrichtung ausgestattet, die in Wirkverbindung mit der Hydrostat-Überbrückungseinrichtung bzw. Übersetzungs-Festpunktschaltung und dem stufenlosen Wandler 4c steht.

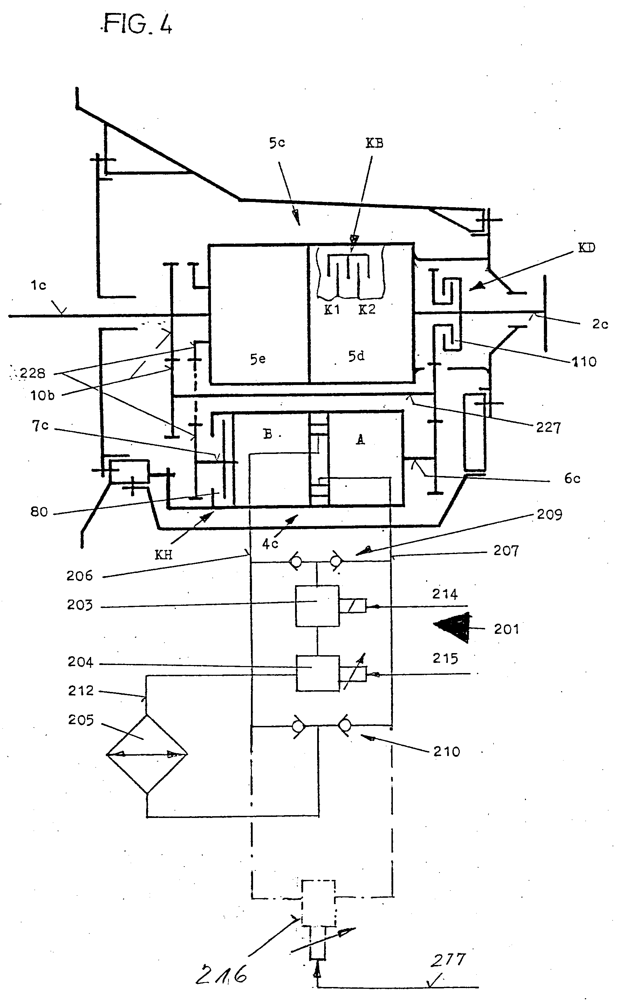

In Figur 4 ist ein Leistungsverzweigungsgetriebe mit einem hydrostatischen Wandler 4c und einem Summierungsgetriebe 5c dargestellt. Das Summierungsgetriebe 5c kann auch die Funktion eines Verzweigungsgetriebes haben, weshalb nachfolgend auch die Bezeichnung "Summierungs-/Verzweigungsgetriebe" verwendet wird. Der hydrostatische Wandler besteht aus einer ersten Hydrostateinheit A verstellbaren Volumens und einer zweiten Hydrostateinheit B vorzugsweise konstanten Volumens. Beide Hydrostateinheiten A und B bilden vorzugsweise eine gemeinsame Baueinheit, die über Triebräder mit der Antriebswelle 1c und auf der gegenüberliegenden Seite über weitere Triebräder mit einem Summierungsgetriebe 5c in Triebverbindung steht. Das Summierungsgetriebe ist vorzugsweise als Planetengetriebe ausgebildet, dem je nach Ausführung ein weiteres Getriebe 5d, mit oder ohne Schalteinrichtungen, z.B. für Bereichsschaltungen zum Schalten mehrerer Fahrbereiche, zugeordnet sein kann. Die Leistung wird bei diesem Getriebe eingangsseitig aufgeteilt in einen hydrostatischen und einen mechanischen Zweig. Der hydrostatische Leistungsanteil fließt über die Triebräder und Zwischenglieder 227 über den stufenlosen Wandler 4c und die Triebräder auf das Summierungsgetriebe 5c. Der mechanische Zweig wird direkt oder über Zwischenglieder in das Summierungsgetriebe 5c geleitet, indem hydraulische und mechanische Leistungsflüsse aufsummiert werden und gemeinsam auf die Abtriebswelle 2c gelangen. Der stufenlose Wandler bzw. das Hydrostatgetriebe 4c ist hierbei mit einer Hydrostat-Überbrückungseinrichtung als Hydrostat-Sperreinrichtung in Form einer Bremse bzw. Kupplung KH ausgestattet, die dazu dient, die Triebwelle 7c der zweiten Hydrostateinheit B festzuhalten bzw. mit dem Gehäuse 19c des stufenlosen Wandlers oder einem feststehenden Getriebeteil zu koppeln, so daß die bei Leistungsverzweigungsgetrieben bekannten Stützmomente über die genannte Kupplung bzw. Bremse bevorzugt am Getriebe- oder Wandler-Gehäuse abgestützt werden, um das Hydrostatgetriebe zu entlasten bzw. dieses drehmomentfrei und druckfrei zu halten. Es ist auch möglich, die Hydrostatwelle 7c der Hydrostateinheit B durch eine weitere, nicht dargestellte Kupplung ganz zu trennen.

Die Hydrostat-Sperreinrichtung KH hat die Aufgabe, den stufenlosen Wandler 4c bzw. das Hydrostatgetriebe in den hydraulisch leistungslosen Betriebszuständen bei Hydrostat-Verstellgröße "Null" drehmoment- bzw. belastungsfrei zu halten. Dies wird, derart gelöst, daß die Drehmomentstützkraft aus dem Summierungs/Verzweigungsgetriebe 5c bei Hydrostat-Nullstellung, die in der Regel in der Mitte eines jeden Schaltbereiches liegt, nicht an den Hydrostatelementen sondern an einem entsprechenden zwischengeschalteten Brems- bzw. Kupplungselement gegenüber einem feststehenden Gehäuseteil bzw. Getriebeteil abgestützt wird. Bei Getrieben mit mehreren Schaltbereichen wird das Hydrostatgetriebe mehrmals innerhalb seinem vollen Stellbereich durchfahren, wobei innerhalb eines jeden Schaltbereiches der hydraulisch

7

leistungslose Zustand bei Neutralstellung, das heißt bei Verstellgröße "Null" des Hydrostatgetriebes , entsprechend Hydrostat-Neutralstellung, vorkommt. Dieser Betriebspunkt liegt meistens in einem wichtigen Betriebsbereich des Fahrzeuges, bei dem ein besonders guter Wirkungsgrad gefordert wird.

In den eingangs erwähnten Leistungsverzweigungsgetrieben nach DE-A-40 27 724, DE-A-41 06 746 und PCT/DE 89 00 586, die, wie bereits erwähnt, Bestandteil dieser Erfindung sind, wird die Verstellcharakteristik des Hydrostatgetriebes näher beschrieben.

Um hydrostatische Verspannungen in dieser Verstell-Neutrallage des Hydrostatgetriebes zu verhindern, ist ein Bypaßventil 114c vorgesehen, das zwischen die beiden Arbeitsdruckleitungen der beiden Hydrostateinheiten A und B geschaltet ist. Dieses Bypaßventil ist automatisch oder auch manuell bei geschalteter Hydrostat-Sperreinrichtung betätigbar, wodurch beide Arbeitsdruckleitungen drucklos bzw. ohne Differenzdruck sind. Die Hydrostat-Sperreinrichtung bzw. die Kupplung/Bremse KH und das Bypaßventil werden sinnvollerweise über den selben Steuerdruck angesteuert, wobei das Bypaßventil jedoch erst nach geschlossener Kupplung/Bremse KH aktiviert wird, derart, daß die Druckrückmeldung nach Schließen der Kupplung KH das Signal bzw. den Steuerdruck zur Aktivierung des Bypaßventiles auslöst. Die Hydrostat-Sperreinrichtung KH ist automatisch schaltbar, z. B. in Abhängigkeit einer definierten Verweildauer des Getriebes bei der Hydrostat-Neutralstellung, wobei eine vorprogammierte Zeitgröße für diese Verweildauer das entsprechende Steuersignal für die Hydrostat-Sperreinrichtung auslöst. Für manuelle Schaltung ist vorgesehen, bevorzugt über ein optisches oder akustisches Signal dem Fahrer diesen Betriebszustand und die Schaltmöglichkeit anzuzeigen. Das Lösen der Hydrostat-Sperre kann ebenfalls auf verschiedene Art erfolgen, z.B. durch ein Fahr- bzw. Gaspedal-Signal, das heißt bei Veränderung der Gaspedalstellung oder durch ein lastabhängiges Signal oder durch verschiedene Signale, die durch veränderliche Betriebswerte bestimmt werden. Im Hinblick auf Optimierung des Kraftstoffverbrauches kann z.B. die Fahrregelung so ausgelegt werden, daß die Getriebe-Wirkungsgradlinie und die Verbrauchsbestlinie des Motors eingespeichert und die Fahrzeugregelung in Abhängigkeit zur jeweiligen Betriebssituation entscheidet, ob der nächstliegende Getriebeübersetzungspunkt mit Hydrostat-Neutralstellung angesteuert werden soll oder nicht. Je nach Fahrzeugart kann ein weiterer Parameter in Abhängigkeit zum Belastungs- bzw. Geräuschverhalten des Getriebes als Entscheidungsfaktor mit eingespeichert bzw. einprogrammiert werden. Dies kann beispielsweise bei Anwendung in einem PKW sinnvoll sein.

Die Erfindung sieht desweiteren vor, den hydraulischen Leistungszweig auch an den Übersetzungspunkten der Bereichschaltstellen auszuschalten. Das bedeutet, daß am Ende des alten Schaltbereiches und zu Beginn des neuen Schaltbereiches die Kupplungen KB für beide Bereiche geschlossen bleiben und der Hydrostat in dieser Verstellgröße fixiert und lastlos gesetzt wird, z. B. durch gleichzeitiges Betätigen des obengenannten Bypaßventiles oder/und einer genauen Ausrichtung bzw. Korrektur der Hydrostatverstellung, derart, daß die beiden hydrostatischen Arbeitsdruckleitungen drucklos bzw. ohne Differenzdruck sind. Die Leistung wird in diesem Schaltzustand rein mechanisch übertragen und zwar über die Kupplungen bzw. Kupplungseinrichtungen der beiden angrenzenden bzw. benachbarten Schaltbereiche. Die Schaltsignale für diese Schaltung können mit gleichen Signalen, wie für die Hydrostat-Sperreinrichtung beschrieben, verwirklicht werden. Bei einem Getriebe, z. B. mit vier Vorwärtsfahrbereichen, sind auf diese Art sieben Übersetzungs-Festpunkte bei lastlosem Hydrostat schaltbar.

Die Erfindung sieht , wie erwähnt, für Leistungsverzweigungsgetriebe eine Stabilisierungseinrichtung KD bzw. Hydrostat-Überbrückungs-Einrichtung vor, die an einer oder mehreren Übersetzungspunkten feste Übersetzungs-Einstellungen hält, an denen der hydrostatische Leistungsfluß ausschaltbar ist zur weiteren Verbesserung des Wirkungsgrades.

Wie in Figur 4 dargestellt, ist z. B. die Abtriebswelle 2c über eine Zahnradstufe 10b mit der Antriebswelle 1c über eine Zwischenwelle 227 durch Schließen einer Kupplung KD in Triebverbindung, um nach Schließen dieser Kupplung das Hydrostatgetriebe lastlos zu setzen. Für weitere wichtige Übersetzungspunkte, denen ein hoher Betriebsanteil zukommt, können weitere, nicht dargestellte, Übersetzungsstufen mit entsprechend zugeordneter Kupplung vorgesehen werden.

Eine Ausführung gemäß Figur 3 zeigt z.B. eine Stabilisierungs- bzw. Hydrostat-Überbrückungseinrichtung, bei der mittels einer Kupplung KD ein direkter Durchtrieb, ohne Zahneingriff bzw. Zahn-Wälzleistung, zwischen Antriebswelle 1c und Abtriebswelle 2c hergestellt und somit der Wandler 4c und das Summierungs-Verzweigungsgetriebe 5c in lastlosen Zustand gesetzt wird.

Die Stabilisierungseinrichtung bzw. Hydrostat-Überbrückungseinrichtung KD ist auch mit zwei oder mehreren Kupplungen ausführbar, (nicht dargestellt), um den stufenlosen Wandler und das Summierungsverzweigungsgetriebe vollständig abzukoppeln. Bei Kombination mit einem bereits beschriebenen Bypaßventil oder/und einer entsprechenden Hydrostat-Verstelleinrichtung mit gezielter Verstellregelung kann auf die zweite Kupplung verzichtet werden.

Die Schaltkupplung für die Hydrostat-Überbrückungseinrichtungen KH; KB; KD ist verschiedenartig ausführbar und kann zum Beispiel für die Hydrostat-Sperreinrichtung KH beliebig an einem der Zwischenglieder bzw. Triebelemente 7c zwischen der zweiten Hydrostateinheit B und dem Summierungsgetriebe 5c angeordnet werden. Die Kupplungen KH; KB; KD sind bevorzugt als formschlüssige Kupplung ausgebildet wie in der PCT-Druckschrift DE-A- 87/00 324, DE-A-41 26 650 A1 und in der europäischen PCT-Anmeldung DE 88/00 563, die Mitbestandteil dieser Erfindung sind, näher beschrieben. Die Kupplung zeichnet sich insbesondere dadurch aus, daß sie formschlüssig schaltbare Kupplungselemente mit einer Kupplungsverzahnung mit oder ohne Abweisverzahnung besitzt und daß mittels eines auf einem Kupplungsträger verschiebbar angeordneten hydraulisch betätigbarer Kolbens die Schaltung bei Synchronlauf bzw. im Synchronlaufbereich auch bei gewisser Relativ-Drehzahl möglich ist. Es ist auch möglich, wie in vorgenannten bekannten Druckschriften beschrieben, zusätzliche Synchronisiereinrichtungen vorzusehen. Diese vorgenannte formschlüssige Kupplung hat den Vorteil, daß sie nahezu schleppverlustfrei ist, da keine Reibelemente vorhanden sind. Es ist aber auch möglich, die Kupplung als Reibkupplung in Form einer Konuskupplung, wie z. B. in der DE-A-41 26 650 dargestellt, zu verwenden. Auch diese Kupplung kann weitgehend schleppverlustfrei sein, da durch den Konuseffekt die Reibfläche relativ gering ist. Auch die Anwendung einer Lamellenkupplung in bekannter Bauweise kann unter Umständen sinnvoll gestaltet werden. Eine weitere Art einer formschlüssigen Kupplung mit mechanischen Schaltelementen, z. B. mittels Schaltklaue, Schaltmuffe oder/und mit servoverstärkten Schaltelementen ist, je nach gewähltem Getriebeaufbau, sinnvoll anwendbar. In nicht dargestellter Form ist alternativ die Kupplung KH für die Hydrostat-Sperreinrichtung im Summierungsgetriebe 5c angeordnet. Bei Ausführung nach Figur 2 empfiehlt es sich, die Kupplung KH auf einer mit einem Zugkraftverstärker 77c verbundenen Welle 73c anzuordnen. Hierbei können Zugkraftverstärker 77c und Kupplung KH zu einer gemeinsamen Baueinheit bauraum- und kostengünstig zusammengefaßt werden.

Der Hydrostat ist bei allen bereits beschriebenen Einrichtungen zur Abschaltung des Hydrostatbetriebes über das beschriebene Bypaßventil 114c; 216 oder/und durch eine entsprechend ausgebildete Hydrostat-Verstellregelung lastlos zu setzen.

Durch alle vorgenannten Einrichtungen zur Ausschaltung des hydrostatischen Leistungsflusses werden die Getriebeverlustleistungen verringert zur Verbesserung des Wirkungsgrades.

Der hydrostatische Wandler 4c ist zur weiteren Wirkungsgradverbesserung bevorzugt so ausgebildet, das er im ölleeren Gehäuse bei gleichzeitig geringen Speisedrücken panschverlustfrei arbeiten kann.

Gemäß der Erfindung besitzt das Getriebe eine integrierte Bremsanlage, wozu der hydrostatische Wandler 4c mit den vorbeschriebenen Wandler-Überbrückungseinrichtungen bzw. schaltbaren Übersetzungs-Festpunkten in Wirkverbindung steht (siehe Figur 4). Das Hydrostat-Getriebe 4c wirkt hierbei als hydrostatische Pumpe, wobei die Bremsenergie über Arbeitsdruckleitungen und entsprechend zugeordnete Schalt- und Regelventile 203, 204 über einen Wärmetauscher 205 geleitet wird. Die von der jeweiligen Betriebssituation bestimmte Größe der Bremsenergie wird über das genannte Druck-Regelventil bzw. Druckbegrenzungsventil und die Hydrostat-Verstellung gesteuert. Die Bremsfunktion beruht darauf, daß im Bremsvorgang zunächst über die Steuer- und Regeleinrichtung der nächstliegende bzw. günstigste schaltbare Übersetzungs-Festpunkt gesucht und angesteuert wird und daß nach geschaltetem Übersetzungs-Festpunkt durch Veränderung der Hydrostat-Verstellung ein Drehmoment an einer oder an beiden Triebwellen der beiden Hydrostateinheiten A und B erzeugt wird, welches über die entsprechenden Zwischenglieder 227, 228 das Motor-Bremsmoment unterstützen. Die dabei erzeugte Pumpleistung des Hydrostat-Getriebes stellt die Bremsenergie dar, die über den Wärmetauscher 205 abgeführt wird. Ein oder auch beide der Hydrostateinheiten A und B können als Hydrostat-Pumpen wirksam werden, je nach Betriebssituation, geforderter Bremsleistung oder/und der jeweils geschalteten Art der Hydrostat-Überbrückungseinrichtung KH; KB; KD. Ist zum Beispiel der Übersetzungs-Festpunkt über die Hydrostat-Sperreinrichtung KH geschaltet, ist die Pumpleistung der ersten Hydrostateinheit A ausnutzbar. Bei Schaltung des Übersetzungs-Festpunktes über die Bereichs-Blockschaltung KB können beide Hydrostateinheiten A und B wirksam werden, wobei doppelte Bremsenergie aufnehmbar ist. Dies ist am Ende eines jeden Schaltbereiches durch Schließen zweier Bereichskupplungen, wie erwähnt, und auch am Ende des letzten Fahrbereiches durch Schließen einer Überbrückungs-Kupplung KD ausnutzbar. Zum Beispiel bei einem Leistungs-Verzweigungsgetriebe mit vier Vorwärtsfahrbereichen sind gemäß der Erfindung vier Übersetzungs-Festpunkte mit vorgenannter doppelter Hydrostatleistung über die Hydrostateinheiten A und B und weitere vier Übersetzungs-Festpunkte mit einer Bremsenergie-Leistung einer Hydrostateinheit A möglich. Das über das Hydrostat-Getriebe 4c erzeugte Druckmedium bzw. Ölstrom wird über jeweils eine Druckleitung 206 bzw. 207 geführt, wobei eine als Hochdruckleitung und die andere als Niederdruckleitung für den Rückfluß dient. Eine nicht dargestellte Speisepumpe sorgt für einen ständigen Ausgleich der Lecköhlverluste innerhalb des Druck- bzw. Hydrostatsystems.

Der Funktionsablauf stellt sich wie folgt dar:

Bei Bremsbetätigung wird nach erfolgter Getriebe-Rückregelung, wie bereits beschrieben, der nächstliegende bzw. günstigste Übersetzungs-Festpunkt eingeregelt und geschaltet, wobei das Hydrostat-Getriebe zunächst in lastlosen Zustand sich befindet. Zum Beispiel bei Übersetzungs-Festpunkt über die Bereichs-Blockschaltung KB ist in diesem Zustand die Hydrostateinheit A in der Regel voll ausgeschwenkt, wodurch beide Hydrostateinheiten bei gleicher Drehzahl die dementsprechende Ölmenge ohne Differenzdruck innerhalb des Wandlergetriebes in Umlauf halten. Erst nach Verstellung der Hydrostateinheit A auf kleineres Volumen wird die Differenz-Ölmenge in den Bremsdruckkreis 206 bzw. 207 geführt. Ist die Verstell-Einheit A auf Verstellgröße "Null" geregelt, so wird die gesamte Pumpleistung der zweiten Hydrostateinheit B, die in der Regel als Konstant-Einheit ausgebildet ist, in den Brems-Arbeitsdruckkreis 206; 207 geführt. Bei Weiterführung der Hydrostatverstellung durch "Null" und darüberhinaus arbeitet die Verstell-Einheit A auch als Pumpe, wobei sie am Ende ihrer Verstellgröße, das heißt bei vollem Verstell-Volumen, gleiche Pumpenleistung wie die Konstant-Einheit B liefert. In diesem Zustand ist die höchste Bremsenergie bei doppelter Pumpenleistung übertragbar, wobei beide Einheiten A und B über ihre Triebwellen 7c und 6c und dazugehörigen Triebstränge 227, 228 über das Bremsmoment angetrieben werden. Beide Hydrostateinheiten A und B können auch in unterschiedlicher Größe ausgebildet werden, wobei die jeweiligen Bremsleistungen entsprechend ihrer Größe und ihrer dazugeordneten Drehzahl unterschiedlich sind. Ist die zweite Hydrostateinheit B ebenfalls als Verstell-Einheit ausgebildet, so sind weitere Variationen möglich, z.B. derart, daß beide Einheiten gleichzeitig verstellt oder zuerst die Einheit B und dann die Einheit A, je nach den Betriebssituationen, sinnvoll in ihren Verstellgrößen regelbar sind. Bei den eingangs erwähnten bekannten Getriebeausführungen ist es sinnvoll, die zweite Hydrostateinheit B als Konstant-Einheit auszubilden. Für den Betriebszustand, bei dem der Übersetzungs-Festpunkt durch die Hydrostat-Sperreinrichtung und Schließen der Kupplung KH fixiert wird, ist eine Bremsenergie-Übertragung nur über die erste Hydrostateinheit A möglich, die über den entsprechenden Triebstrang 227 angetrieben wird. In den meisten Betriebssituationen ist dies ausreichend. Für den Fall einer höheren Bremsenergie-Forderung kann diese Kupplung KH geöffnet und sehr schnell durch automatisches Zusammenspiel der Regelungs-Einrichtung ein anderer Übersetzungs-Festpunkt angesteuert werden. Die Erfindung sieht hierfür zur Erzielung eines kontinuierlichen Bremsüberganges ein automatisches kurzzeitiges Zuschalten der Betriebsbremse vor, so daß ein weiches ruckfreies Bremsverhalten über den gesamten Übersetzungsbereich gewährleistet ist. Wird zum Beispiel ein Wechsel von einem Übersetzungs-Festpunkt KH zum Übersetzungs-Festpunkt KB innerhalb der Bremsphase vollzogen, so wird zunächst über die automatische Bremsregelung die Betriebsbremse dazugeschaltet, so daß ein weitgehend lastloser Zustand im Hydrostatgetriebe bei gleichzeitiger automatischer Rückstellung der Hydrostateinheit A vollzogen wird. Entsprechend der automatischen Bremsenergie-Abnahme über das Hydrostatgetriebe nimmt kontinuierlich die Bremswirkung der Betriebsbremse zu. Zur Findung des vorgenannten Übersetzungs-Festpunktes KB durch Ansteuerung der entsprechenden Bereichs-Blockschaltung wird nun das Hydrostatgetriebe in die entsprechende Endstellung bzw. Endverstellgröße gebracht, wonach sofort nach Abschluß der Schaltung des genannten Übersetzungs-Festpunktes die Betriebsbremse bei gleichzeitiger Nachregelung des Hydrostatgetriebes und Übernahme der hydrostatischen Bremsleistung die Betriebsbremse kontinuierlich gelöst wird. Dieser Funktions-ablauf kann über entsprechend abgestimmte Signalgrößen aus mehreren Betriebsgrößen wie Bremsdrucksignal, Hydrostat-drucksignal, Verstellsignal des Hydrostatgetriebes oder/und Motordrehzahlsignal oder/und weiteren Signalen verwirklicht werden.

Die hydrostatische Bremseinrichtung besteht neben dem hydrostatischen Wandler 4c aus einem ersten Rückschlag-Ventil 209, über welches der Ölstrom der jeweiligen Hochdruckleitung 206 bzw. 207 auf ein erstes Schaltventil 203 und ein nachgeordnetes Druck-Regelventil 204 geleitet wird. Das Schaltventil 203 wird über ein Öffnungssignal 214 zur Freigabe der hydrostatischen Bremsfunktion geschaltet. Das Druckregel-Ventil 204 wird über ein variables Regelsignal 215 angesteuert, das in Abhängigkeit zur Größe der Bremskraft steht und den Hydrostat-Druck bestimmt. Der Wärmetauscher 205 ist dem Druckregelventil 204 nachgeordnet, der über eine entsprechende Leitung 217 das aus dem Druckregelventil fließende erwärmte Öl aufnimmt und die gekühlte Flüssigkeit über eine weitere Leitung 213 und ein entsprechendes Rückschlagventil 210 wieder in den Arbeitsdruck-Kreislauf der Bremsanlage einführt.

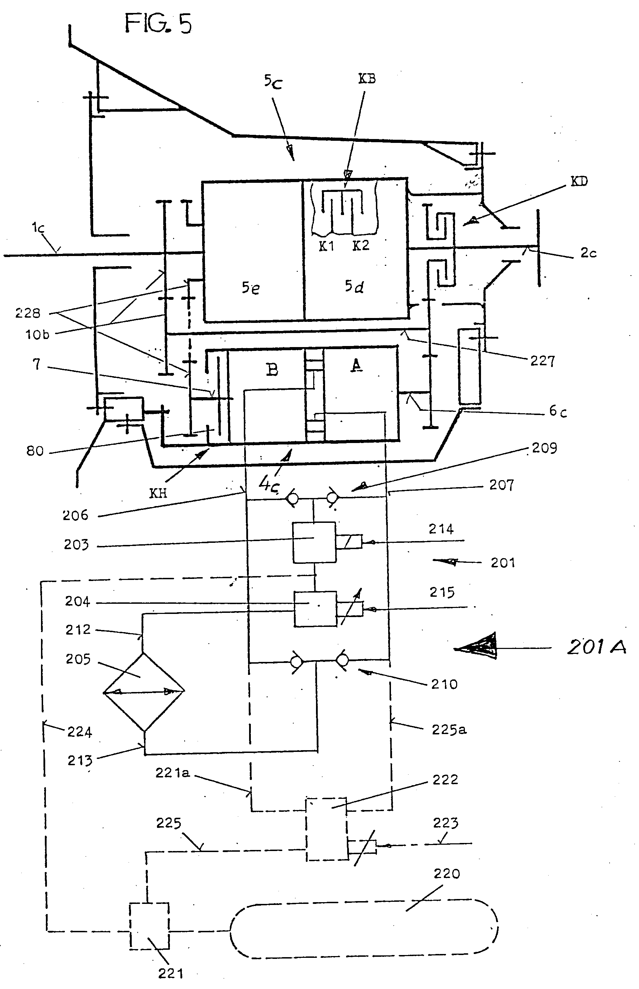

Die Erfindung sieht desweiteren gemäß Figur 5 eine Bremseinrichtung mit einem Energie-Speicher 220 vor. Diese Energie-Speichereinrichtung kann als Zusatzeinrichtung zur vorbeschriebenen hydrostatischen Bremseinrichtung sein. Zu diesem Zweck besitzt die Einrichtung zusätzlich den genannten Speicher 220, ein Speicher-Schaltventil 221, ein Speicher-Entleerungsventil 222 mit einem entsprechenden Ansteuersignal 223. Durch eine Leitung 224 erfolgt der Zufluß und über eine Leitung 225 der Abfluß vom Speicher 220. Als Energie-Speicher wird vorteilhaft ein Hydro-Speicher bzw. Druck-Speicher verwendet.

Bei Kombination der Speicheranlage mit der vorbeschriebenen hydrostatischen Bremseinrichtung wird vorteilhafterweise zuerst der Energie-Speicher mit der Bremsenergie und darauf folgend, ausgelöst durch ein entsprechendes Drucksignal, die Bremsenergie über das Regelgerät 204 bzw. Druck-Regelventil über den Wärmetauscher 205 zurückgeführt. Es ist auch möglich, eine gemischte Funktion zu steuern, wobei zum Beispiel bei spontanen bzw. oder/und sehr hohem Bremsenergie-Anfall die Speicher-Einrichtung und die Einrichtung über das Kühlsystem bzw. den Wärmetauscher 205 gleichzeitig ansprechen. Über das Druck-Regelventil 204, dessen Regelsignal 215 des Kühlsystems und dem Speicher-Füll- bzw. Regel-Ventil 221 und 222 ist eine entsprechend abgestimmte Bremsfunktion zur Schaltung durch ein variables Signal 223 möglich.

Die Bremsregelung ist gemäß der Erfindung so ausgelegt, daß in Abhängigkeit zur Betätigungskraft und der Bremskraft oder/und der Größe der Bremsenergie eine entsprechende Motordrehzahl zugeordnet ist. Dies bedeutet, daß bei niedriger Bremskraft die Motordrehzahl nur geringfügig und bei hoher Bremskraft die Motordrehzahl entsprechend stärker angehoben wird. Dies ist insbesondere bei Personenkraftfahrzeugen sinnvoll in Bezug auf das Geräuschverhalten. In diesem Zusammenhang sei auch auf die europäische Patentanmeldung 0 280 757 A1 und die deutsche Patentanmeldung P 43 15 369.0, die Mitbestandteile dieser Erfindung sind, hingewiesen.

In der Getriebeausführung nach Fig. 2 ist ein Bremselement, bevorzugt als hydrodynamischer Retarder 77c, vorgesehen, der als Zugkraftverstärker dient und zwar in der Form, daß das als Stützmoment wirkende Drehmoment der zweiten Hydrostateinheit B für den Anfahrbereich verstärkt wird und das Hydrostatgetriebe bzw. die zweite Hydrostateinheit B entsprechend entlastet wird. Die Einrichtung ist anwendbar für Leistungsverzweigungssysteme, bei denen auch der erste Fahrbereich mit Leistungsverzweigung arbeitet und wie erwähnt die Anfahrzugkraft von der Größe des Stützmomentes gegen die zweite Hydrostateinheit B abhängig ist. Dies trifft z.B. für die eingangs erwähnten bekannten Getriebe-Systeme und das System nach Figur 3 zu.

Das Brems- bzw. Retarderelement 77c, 82c für die Zugkraftverstärkung ist mit der Zwischenwelle 73c verbunden. Es kann sehr vorteilhaft als alternative Baueinheit im Frontdeckel 61c bauraumsparend und fertigungstechnisch günstig herstellbar, vorzugsweise als gemeinsame Baueinheit mit dem Frontdeckel 61c gebildet werden. Der Retarder 77c ist beliebig an jedem Glied des Triebstranges 7c, 73c der zweiten Hydrostateinheit B anschließbar (nicht dargestellt).

Das Brems- bzw. Retarderelement 77c dient, wie erwähnt, als Zugkraftverstärker im Anfahrbereich, wobei die Ansteuerung des
Retarders über eine Druckflüssigkeit erfolgt, die in Abhängigkeit zum Hydrostatdruck modulierbar ist. Hierbei ist erfindungsgemäß vorgesehen, daß ab einem bestimmten Hydrostatdruck über das entsprechende Drucksignal die Retarder-Befüllung automatisch ausgelöst wird. Ein zusätzliches Signal kann ein Drehzahl-Signal bilden, das aus der Antriebsdrehzahl der Antriebswelle 1c bzw. des Antriebsmotors oder/und aus der Drehzahl der zweiten Hydrostateinheit B resultiert. Hydrostatdrucksignal und Drehzahl-Signal können ein gemeinsames Steuersignal für den Retarder 77c bilden. Ein weiteres anwendbares Signal kann auch ein Verstell-Signal der ersten Hydrostateinheit A sein, das zusätzlich oder anstelle des Drehzahlsignals der zweiten Hydrostateinheit B dient. Das genannte Verstellsignal stellt in Verbindung mit dem Antriebsdrehzahlsignal des Motors auch eine Größe für das Drehzahl-Signal der zweiten Hydrostateinheit B dar. Die Funktionsvorwahl wird automatisch mit dem Schalten des ersten Vorwärts- bzw. des ersten Rückwärtsbereiches festgelegt. Es ist auch möglich, diese Funktion nur wahlweise dazuzuschalten, z.B. wenn ein entsprechendes Signal, ausgehend von der Hydrostatbelastung bzw. dem Hydrostatdruck die Notwendigkeit über ein Licht- oder akustisches Signal dem Fahrer angezeigt wird.

Ziel des Zugkraftverstärkers ist es auch, den hydrostatischen Wandler 4c kleiner dimensionieren zu können, indem die dimensions-bestimmenden Anfahrbelastungen für den Hydrostaten wesentlich verringert werden.

Anstelle des hydro-dynamischen Retarders 77c ist auch eine Reibbremseinrichtung zum Beispiel als Lamellenkupplung, wie bereits für die Hydrostat-Sperrkupplung KH beschrieben, anwendbar. Voraussetzung hierbei ist jedoch, daß der Betriebspunkt mit sehr hoher Zugkraft nur selten vorkommt oder/und daß die Bremse bzw. Kupplung KH sehr schnell voll geschlossen werden kann, um das Verschleiß-Verhalten zu minimieren. Bei einem Leistungs-Verzweigungsgetriebe mit z.B. vier Vorwärtsfahrbereichen liegt der Betriebspunkt, bei dem die Hydrostatwelle der Einheit B festgehalten werden kann, bei einer sehr niedrigen Fahrgeschwindigkeit, bei der die Höchstzugkräfte des Fahrzeugs fahrbar sind. Aus diesem Grund ist es durchaus möglich, diesen Getriebe-Übersetzungspunkt, der als erster Übersetzungs-Festpunkt schaltbar ist, auch sehr sinnvoll mit einer Reibkupplung zu betreiben. Auch eine formschlüssige Kupplung, wie eingangs beschrieben, bevorzugt mit Abweisverzahnung ist sinnvoll anwendbar, wobei die Schaltung jedoch erst bei Stillstand der entsprechenden Hydrostatwelle geschaltet werden kann. Im Anfahrbereich wird hierbei bis zu diesem Übersetzungs-Festpunkt die Zugkraft über das Hydrostatgetriebe mit entsprechendem Hydrostatdruck erzeugt, der dann nach Schließen der genannten Kupplung KH entlastet werden kann. Auch eine Kombinations-Schaltung des hydro-dynamischen Retarders 77c mit der Hydrostat-Überbrückungskupplung KH ist sinnvoll anwendbar, insbesondere bei Fahrzeugen, die sehr hohen Betrieb im unteren Geschwindigkeitsbereich bei hoher Zugkraft haben. Der hydrodynamische Retarder 77c wird hierbei vorteilhafterweise zuerst angesteuert und die Reibkupplung KH im Folgevorgang dazugeschaltet.

Die Bremssteuerung ist erfindungsgemäß so ausgelegt, daß eine vorgegebene Bremscharakteristik zur Wirkung kommt, derart, daß bei Bremsbetätigung zunächst ein definiertes Motordrehmoment durch Übersetzungsrückstellung des Getriebes und entsprechende Anhebung der Motordrehzahl erzeugt wird. Erst nach definierter Erhöhung der Motordrehzahl beginnt die Betriebsbremse dazuzuschalten, z.B. in Abhängigkeit eines entsprechenden Motordrehzahl-Signals. Gleichzeitig oder nach Einsatz der Betriebsbremse kann bedarfsweise die beschriebene Hydrostatbremse durch den hydrostatischen Wandler 4c einsetzen, so daß ein kontinuierlicher Bremsbetrieb gegeben ist ohne die Betriebsbremse zu überfordern. Die Hydrostatbremseinrichtung, die vorwiegend als Dauerbremse vorgesehen ist, kann hierbei sinngemäß für kurzzeitige Betriebs-bremsungen ebenfalls mitbenutzt werden zur Schonung der Bremsbeläge der Betriebsbremsanlage. Im Hinblick auf einen akustisch akzeptablen Bremsbetrieb kann der Motorbremsanteil erfindungsgemäß relativ niedrig gehalten werden durch Mitbenutzung des hydrostatischen Wandlers 4c als Bremsanlage, wobei, wie bereits beschrieben, an jedem Übersetzungsfestpunkt die Hydrostat-Bremse einsetzen oder mit dazugeschaltet werden kann.

Das Brems-Druckventil 203, 204 ist vorteilhaft direkt am hydrostatischen Wandler 4c, der vorzugsweise elastisch und geräusch- und schwingungsdämmend im Getriebe gelagert ist, angebaut. Die Bremsventil-Geräusche werden auf diese Weise wirkungsvoll nach außen abisoliert. Der hydrostatische Wandler 4c besitzt hier vorteilhafterweise eine Dreipunkt-Lagerung mit schwingungsdämmenden, teilweise elastischen Lagerstellen wie in der DE-A-42 35 728 näher beschrieben. Diese Patentanmeldung ist Mitbestandteil dieser Erfindung.

Die Hydrostat-Bremsanlage über dem hydrostatischen Wandler 4c besitzt erfindungsgemäß alternativ eine Warn-Signalanlage in Form eines Licht- oder akustischen Signals, um für die nicht- bzw. teilautomatisierte Ausführung anzuzeigen, daß die Betriebsbremse manuell zu betätigen ist, damit die Motordrehzahl gesenkt und die Getriebe-Rückstellung zum Schalten in den nächstkleineren Betriebsbereich bzw. nächstliegenden Übersetzungs-Festpunkt ermöglicht wird.

Die Steuer- und Regeleinrichtung kann, wie nachfolgend oder teilweise in der europäischen Patentanmeldung 0 280 757 näher beschrieben, ausgebildet sein. Die Steuer- und Regeleinrichtung besitzt zum Erreichen eines kontinuierlichen und optimalen Bechleunigungsverhaltens und zur allgemeinen Steigerung der Fahrleistungen eine Einrichtung, die die Verstellgeschwindigkeit im wesentlichen lastabhängig dosiert, indem die Verstelleistung der Fahrsituation und dem Fahrerwunsch entsprechend im Rahmen der Maximalleistung des Antriebsmotors angepaßt ist.

Die Erfindung stellt desweiteren eie Verbesserung der Schaltqualität des Getriebes bzw. dessen Einrichtugen gemäß
DE 41 26 650 dar.

Ein bekanntes Getriebe dieser Art nach DE 38 38 767 berücksichtigt zur verbesserung der Schaltqualiät ebenfalls eine volumenkorrektur beim Schaltablauf. Die Korrekturgrößenverhältnisse sind bei diesem bekannten Getriebe bei allen Bereichsschaltungen gleich groß. Beim Erfindungsgegenstand hingegen ist eine den unterschiedlichen mechanischen Übersetzungsverhältnissen bzw. den unterschiedlichen Bereichsgrößen angepaßte Volumenkorrektur vorgesehen.

Bei stufenlosen hydrostatisch-mechanischen Verzweigungsgetrieben ist es charakteristisch, daß nach jedem Bereichswechsel bzw. nach jeder Bereichsschaltung sich die Hydrostateinheiten A und B in ihrer Funktion als Pumpe und Motor vertauschen. Der lastabhängige Drehzahlschlupf des Hydrostatgetriebes bzw. der mit der Hydrostateinheit B verbundenen Well 5 hat nach jeder Bereichsschaltung umgekehrte Auswirkung, die durch die Verstelleinrichtung innerhalb der Schaltphase korrigiert werden muß, um eine ruckfreie Schaltung zu gewährleisten.

Aufgabe der Erfindung ist es, eine Schalteinrichtung, bevorzugt für automatisch schaltbare Getriebe, insbesondere für stufenlose Verzweigungsgetriebe oben genannter Art mit formschlüssigen Kupplungen mit oder ohne Abweisverzahnung oder Reibkupplungen mit Konus-Reibflächen, wie aus DE 41 62 650 bekannt, oder auch mit bekannten Lamellenkupplungen zu schaffen, die hohe Schaltqualität ohne Lastunterbrechung gewährleistet.

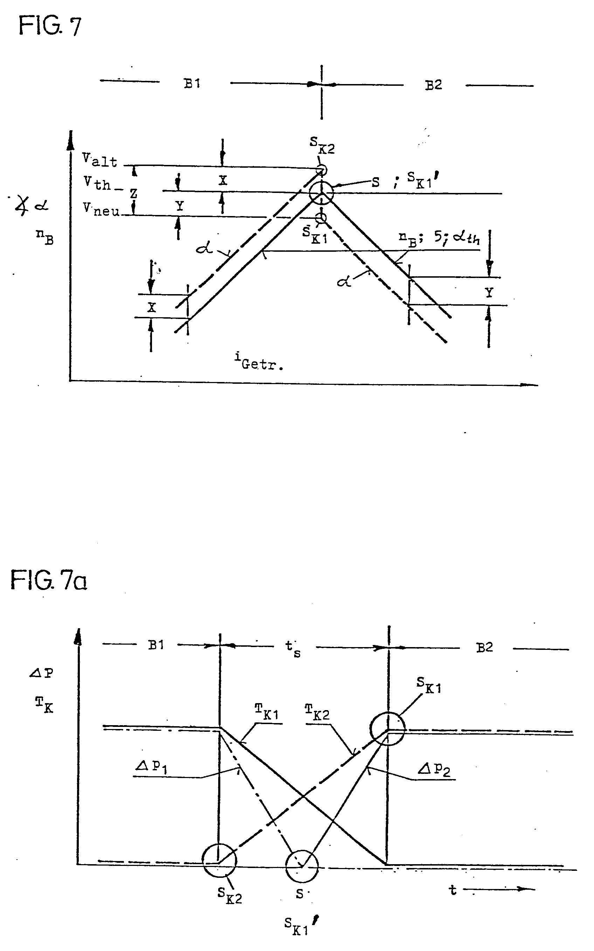

Die Leckölverluste des Hydrostatgetriebes bewirken, wie eingangs erwähnt, einen zwangsläufigen Drehzahlschlupf einer Hydrostatwelle 7c. Dieser Drehzahlschlupf wirkt sich in Verbindung mit einem stufenlosen Leistungsverzweigungsgetriebe mit mehreren Fahrbereichen innerhalb der Bereichsschaltung, wie in Figur 7 dargestellt, so aus, daß zum Beispiel bei Zugbetrieb zum Erreichen des Synchronzustandes der zu schaltenden Kupplungsglieder die Verstellgröße V alt um das Maß X am Schaltpunkt größer sein muß als der theoretische Wert, um am Schaltpunkt S den Synchronpunkt der zu schaltenden Kupplungsglieder zu erreichen. Die Verstellgröße bzw. das maximale Verstellvolumen ist bei der Getriebeauslegung entsprechend groß zu dimensionieren. Aufgrund der erwähnten Funktionsumkehrung von Pumpe zu Motor und umgekehrt nach erfolgter Schaltung in den nächsten Schaltbereich, wirkt sich der Drehzahlschlupf ebenfalls umgekehrt aus, was einer Verstellkorrekturgröße um das Maß Y und damit der Verstellgröße V neu entspricht. In der Regel haben die Korrekturgrößen X und Y unterschiedliche Größen, bedingt durch die jeweilige Getriebeauslegung und Bereichsgrößen entsprechend den unterschiedlichen Größen der Hydrostatdrücke

$\Delta$p1 und $\Delta$p2 bzw. $\Delta$p alt und $\Delta$p neu am Ende des alten und Beginn des neuen Schaltbereiches. Innerhalb der Schaltphase ist das Hydrostatgetriebe in seiner Verstellung in Abhängigkeit zum Lastzustand um das Korrekturmaß X + Y = Z zu korrigieren. Nach einem, wie in Figur 7 dargestellten Schaltbeispiel, wobei B1 Bereich 1 und B2 Bereich 2 bedeutet, ist der Funktionsablauf wie folgt:

Bei einer Hochschaltung unter Last von B1 in B2 wird das Schaltsignal zum Schließen der neuen bzw. zweiten Bereichskupplung ausgelöst sobald das mit der zweiten Hydrostateinheit B in Triebverbindung stehende Kupplungsglied mit den zu schaltenden Kupplungsgliedern am Schaltpunkt S Synchronlauf erreicht hat. Die Hydrostat-Verstellgröße "V alt" ist hierbei um das Maß X größer als der theoretische Wert V th. Nun erfolgt die Schaltung in den neuen bzw. zweiten Bereich bzw. das Schließen der zweiten Bereichskupplung nach erfolgtem Synchronimpuls, wobei die alte bzw. erste Bereichskupplung geschlossen bleibt. Die Hydrostatverstellung wird nun um das Maß Z zurückgeregelt innerhalb beider geschlossener Kupplungen bis der Stellpunkt SK1 erreicht ist, wonach das Signal zum Öffnen der alten bzw. ersten Bereichskupplung erfolgt. Erst danach wird die Getriebeüber-setzung bei weiterer Hydrostatverstellung weiter verändert, um den neuen bzw. zweiten Bereich zu durchfahren.

Um den unterschiedlichen Drehzahlschlupf-Größen des Hydrostatgetriebes am Ende des alten und zu Beginn des neuen Schaltbereiches mit den entsprechend unterschiedlichen Einzel-Verstellkorrekturgrößen X und Y zur Schaltoptimierung Rechnung zu tragen, sieht die Erfindung eine , den jeweiligen Auslegungsverhältnissen angepaßte Verstellregelung vor, wonach für die Verstellgröße bzw. das Verdrängungsvolumen V neu der verstellbaren Hydrostateinheit A eine Verstell- bzw. Volumenkorrektur bewirkt wird und zwar größenmäßig nach der Beziehung

1)    $V \text{ neu} = V \text{ alt} - (V \text{ alt} - V \text{ neu}) \cdot \text{fz}$

$$2) \qquad \text{fz} \quad = \quad \frac{\Delta p \text{ alt} + \Delta p \text{ neu}}{\Delta p \text{ alt}} \quad = \text{Korrekturfaktor}$$

Der Korrekturfaktor fz stellt einen Vergrößerungsfaktor in Bezug auf die Einzelkorrekturgröße X bzw. Y des alten Schaltbereiches dar, woraus sich die Gesamtkorrekturgröße Z errechnet. Der Korrekturfaktor fz ist ein fester Wert, der durch die jeweilige mechanische Getriebeübersetzung bestimmt wird und für jeden der Übersetzungsfestpunkte der einzelnen Bereichsschaltungen unterschiedliche Größe haben kann. Das heißt, daß z.B. bei einem Vierbereichs-Getriebe, wie in Figur 3 schematisch dargestellt, mit einer bestimmten Gang- bzw. Bereichsabstufung, für eine Hochschaltung von Bereich 1 in Bereich 2 (Bereichsschaltung 1/2) der Korrekturfaktor fz = 1,85, für die Schaltung 2/3 = 3,04 und für die Schaltung 3/4 = 2,75 betragen kann. "fz" wird also durch das jeweils festgelegte Größenverhältnis der einzelnen Schaltbereiche zueinander bzw., wie bereits erwähnt, durch die festgelegten mechanischen Übersetzungen bestimmt, wodurch die unterschiedlichen Druckverhältnisse des Hydrostatgetriebes am Ende des alten und zu Beginn des neuen Schaltbereiches bei gleichbleibendem Lastzustand definiert sind. Oben genannte Beziehung 1) ist gültig für alle Schaltzustände, ob Zug- oder Schubschaltung oder Hoch- und Rückschaltung, wobei jedoch bei Rückschaltungen sich die Gesamtkorrekturgröße Z nicht aus X sondern aus Y errechnet was die Formel 2) deutlich macht. Für die Rückschaltungen besitzt z.B. das oben erwähnte Vierbereichs-Getriebe nach Figur 8 bei gleicher vorerwähnter Übersetzungsauslegung feste Korrekturfaktoren fz beispielsweise für die Bereichsschaltung 2/1 = 2,17, für die Bereichsschaltung 3/2 = 1,49 und für die Bereichsschaltung 4/2 = 1,57.

Nachdem die Korrekturfaktoren fz sowohl für die Hochschaltung als auch für die Rückschaltungen jeweils eine feste Verhältniszahl darstellen, können diese in das Steuergerät bzw. den Prozessor als konstante Faktoren einprogrammiert werden, wobei auf die zusätzlichen kostenaufwendigen Einrichtungen für die Drucksignale für Δp alt und Δp neu für den Rechenprozeß verzichtet werden kann. Werden zur Ermittlung des Korrekturfaktors fz die Hydrostatdrücke Δp alt und Δp neu benutzt, so können diese mit ausreichender Genauigkeit sowohl aus den Differenz-Drücken als auch aus den absoluten Hydrostat-Drücken errechnet werden. Die oben erwähnte Beziehung für die Schaltkorrektur geht von der ausreichenden Genauigkeit aus, daß der Drehzahlschlupf des Hydrostatgetriebes sich annähernd proportional zum Hydrostatdruck verhält. Sollten hier jedoch nennenswerte, nichtproportionale Unterschiede vorliegen, so kann dies entsprechend berücksichtigt werden, z. B. durch eine weitere Anpassung des Faktors fz oder einer Anpassung in einem weiteren, später beschriebenen Faktor fk.

Unter Berücksichtigung verschiedener Betriebsverhältnisse sieht die Erfindung desweiteren einen Korrekturfaktor fk vor, der verschiedene Einflußgrößen wie Art der Kupplung, Lamellen-, Konus-, Zahnkupplung oder allgemein Reibkupplungen oder/und Öltemperatur oder/und Verstellgeschwindigkeit oder/und weitere Betriebseinflüsse berücksichtigt. Die Volumen- bzw. Verstellkorrektur wird hier nach folgender Beziehung ermittelt:

$$V \text{ neu } = V \text{ alt } - (V \text{ alt } - V \text{ theor.}) \cdot fz \cdot fk$$

Die Gesamtkorrekturgröße Z wird hierbei um einen festgelegten konstanten oder variablen Faktor fk entsprechend den vorgenannten Einflußgrößen verkleinert. Dies bedeutet z.B., daß das Öffnungssignal für die alte Kupplung abhängig von der Art der Kupplung früher oder später ausgelöst wird.

Als weitere Variante zur Verstellkorrektur ist vorgesehen, daß der Hydrostatdruck p alt zur Ermittlung der neuen Verstellgröße benutzt wird, wobei die neue Verstellgröße V neu durch ein Drucksignal p neu begrenzt wird nach der Beziehung

$$p \text{ neu } = p \text{ alt } \cdot fzp \cdot fk$$

oder als Annäherungswert

$$p \text{ neu } = p \text{ alt } \cdot fzp \cdot fk$$

wobei fzp einen konstanten, in der Getriebeauslegung festgelegten Faktor darstellt, der sich größenmäßig verhält nach der Beziehung

$$fzp = p \text{ neu } / p \text{ alt}$$

Die Verstellgröße des Hydrostatgetriebes wird durch eine elektrische Größe, z.B. als Stromgröße des Proportional-ventils der Hydrostatverstellung oder/und eine direkte Stromgröße, die aus einem mit der Hydrostatverstellung verbundenen Potentiometer signalisiert wird. Im Hinblick auf besonders genaue Verstellwerte für die Bereichsschaltung zur Erzielung bestmöglicher Schaltqualität ist es sinnvoll, neben dem für die Hydrostatverstellung erforderlichen elektrischen Stromes des Proportional-Ventiles oder auch der rein-hydraulischen Steuerung für die Verstellung ist es sinnvoll, die direkte Hydrostatverstellgröße durch einen Potentiometer zu ermöglichen, wobei das Stromsignal aus dem Potentiometer die genauen Meß- und Schaltsignale für die Hydrostat-Verstelleinrichtung bietet. Eine Direktübertragung der Verstellgröße bzw. des Hydrostat-Verstellwinkels ist auch durch bekannte mechanische oder/und hydraulische oder elektrische Mittel möglich, wodurch die erfindungsgemäße Schaltkorrektur realisierbar ist.

Die beschriebene Schaltkorrektur eignet sich besonders für stufenlose Leistungsverzweigungsgetriebe wie z.B. in den europäischen Patentschriften 0 222 108 oder 0 386 214 oder 0 238 521, deren Inhalt Mitbestandteil dieser Erfindung sind, näher beschrieben.

Der Schaltplan gemäß Figur 8 und das Getriebeschema Figur 3 zeigen den schematischen Aufbau eines stufenlosen Leistungsverzweigungsgetriebes mit dem hydrostatischen Wandler 4c sowie eine Darstellung der Steuerung/Regelung mit den Ansteuerventilen für die Bereichs-kupplungen. Das Getriebe besitzt hierbei vier hydrostatisch-mechanische Vorwärts- und zwei hydrostatisch-mechanische Rückwärtsbereiche. Das Getriebe besitzt zusätzlich eine Arretiereinrichtung FH in Form einer Brems- oder formschlüssigen Einrichtung, um die Abtriebsglieder des Getriebes bei Neutralschaltung, das heißt bei Fahrzeugstillstand bei nichteingelegtem Gang vor unkontrolliertem Rotieren zu sichern. In diesem Fall wird z.B. ein Hohlrad eines Planetengetriebes festgehalten, z.B. durch ein federbelastetes Getriebeglied, das nach Einlegen eines Schaltbereiches bzw. nach Vorwahl der Fahrgeschwindigkeit über die Wähleinrichtung 108 automatisch über einen Öldruck gegen den Druck der Feder ausgeschaltet wird sobald der erste Vorwärts- bzw. Rückwärtsbereich bzw. die entsprechende Fahrtrichtung vorgewählt ist.

Im Hinblick auf eine optimal kurze Schaltzeit wird die Hydrostatverstelleinrichtung unmittelbar nach geschlossener neuer Bereichskupplung in die Gegenrichtung umgesteuert. Diese, wie alle oben genannten Funktionen können auf elektronischem Weg in der Steuerlogik auf bekannte Weise einprogrammiert werden. Die vorgenannte Hydrostatumsteuerung kann auch durch ein entsprechendes, nicht dargestelltes Wechselventil, das zum Beispiel in Abhängigkeit des Steuerdruckes pK2 für die zweite Bereichskupplung umgesteuert wird, realisiert werden.

Die Bereichskupplung K1 bis K4 und KV, KR sind bevorzugt als formschlüssige Kupplungen mit oder ohne Abweisverzahnung, wie aus der DE-A-39 03 010 und der DE-A-41 04 167 bekannt, ausgebildet.

Wie in Fig. 6k dargestellt kann bei RQV-Regelungs-Kombination die Summe der Signalgrößen a + b zur Bildung eines Steuersignals ⓒ dienen, wobei ⓒ ein Differenzsignal für die Getriebeverstellung ist.

## Patentansprüche

**1.** Hydrostatisch-mechanisches Leistungs-Verzweigungsgetriebe, insbesondere für Kraftfahrzeuge mit vorzugsweise mehreren Schaltbereichen bestehend aus einem stufenlosen hydrostatischen Wandler (4c) mit einer ersten Hydrostateinheit (A) verstellbaren Volumens und einer zweiten Hydrostateinheit (B) bevorzugt konstanten Volumens und einer Leistungsverzweigungseinrichtung, bei dem die Antriebsleistung aufgeteilt wird in einen hydraulischen und einen mechanischen Zweig, die vor dem Getriebeausgang wieder aufsummiert wird, wobei der stufenlose Wandler von der Antriebswelle direkt oder über Zwischenglieder bzw. Zwischen- stufen angetrieben wird und mit einem Verzweigungs-/Summierungsgetriebe (5c) in Triebverbindung steht
**dadurch gekennzeichnet,** daß eine oder mehrere Hydrostat-Überbrückungseinrichtungen vorgesehen sind, derart, daß ein oder mehrere Übersetzungs-Festpunkte schaltbar sind und daß die Überbrückungs-Einrichtung in Form einer Hydrostat-Sperreinrichtung (KH) für die zweite Hydrostateinheit (B) oder/und in Form einer Bereichsblockschaltung (KB) oder/und in Form einer Stabilisierungseinrichtung (KD) mit rein mechanischem Durchtrieb gestaltet ist und daß der bzw. die Übersetzungs-Festpunkte manuell oder automatisch schaltbar sind.

**2.** Getriebe nach einem der Oberbegriffe der Ansprüche
**dadurch gekennzeichnet,** daß ein oder mehrere Hydrostat-Überbrückungseinrichtungen vorgesehen sind, derart, daß ein oder mehrere Übersetzungs-Festpunkte schaltbar sind und daß die Überbrückungs-Einrichtung in Form einer Hydrostat-Sperreinrichtung (KH) für die zweite Hydrostateinheit (B) oder/und in Form einer Bereichsblockschaltung (KB) oder/und in Form einer Stabilisierungseinrichtung (KD) mit rein mechanischem Durchtrieb gestaltet ist und daß der bzw. die Übersetzungs-Festpunkte manuell oder automatisch schaltbar sind und daß der hydrostatische Wandler (4c) bei einem geschalteten Übersetzungs-Festpunkt als hydrostatischer Brems-Retarder wirksam und steuerbar ist.

**3.** Getriebe nach dem Oberbegriff des Anspruches 1
**dadurch gekennzeichnet,** daß ein oder mehrere schaltbare Übersetzungs-Festpunkte und eine Energie-Speicheranlage vorgesehen ist, wobei der hydrostatische Wandler (4c) bei einem geschalteten Übersetzungs-Festpunkt (KH; KB; KD) so steuerbar ist, daß Bremsenergie in einen entsprechend ausgebildeten Speicher (220)rückgewonnen werden kann, wobei die Energie-Speicheranlage einen Speicher als Hydrospeicher bzw. Druckspeicher (220) oder als Schwungradspeicher oder als elektrischer Speicher besitzt, in dem Bremsenergie, Schubenergie oder auch Antriebsenergie speicherbar ist.

**4.** Getriebe nach einem der Oberbegriffe der Ansprüche
**dadurch gekennzeichnet,** daß die automatisch wirksamen Signale zur Erkennung von Bergfahrt, Talfahrt, Kurvenfahrt, Beschleunigungs-, Verzögerungsfahrt und des Winterbetriebes eine automatische, gezielt angepaßte stufenlose Übersetzungs-Änderungsgeschwindigkeit bewirken.

**5.** Getriebe nach einem der Ansprüche 1 bis 4
**dadurch gekennzeichnet,** daß das hydrostatische Leistungsverzweigungsgetriebe so ausgebildet ist, daß innerhalb eines Schaltbereiches der Hydrostat von einer negativen Endstellung auf eine positive Endstellung in im nächsten daran anschließenden Schaltbereich von seiner positiven auf die negative Endstellung oder umgekehrt gebracht wird, wobei innerhalb der Schaltphase von geschlossener neuer und geschlossener alter Kupplung die Hydrostatverstellung mit Ausnahme eventueller Verstellkorrekturen unverändert bleibt, das heißt, daß das Hydrostatgetriebe nach geschlossener neuer Bereichskupplung im neuen Schaltbereich in die Gegenrichtung umgesteuert wird.

**6.** Getriebe nach einem oder mehreren der Ansprüche 1 bis 5
**dadurch gekennzeichnet,** daß die Bremsanlage mit oder ohne Energiespeicher (220) ausgerüstet ist, wobei bei Ausrüstung mit dem Energiespeicher die Bremsregelung so ausgebildet ist, daß die Bremsenergie wahlweise über den Wärmetauscher (205) fließt oder dem Energiespeicher (220) zugeführt wird, oder daß in einer vorausfestgelegten bzw. programmierten Charakteristik erst der Energiespeicher aufgefüllt und bevorzugt danach, abhängig von einem bestimmten Füllungsgrad, weitere Bremsenergie über den Wärmetauscher (205) abgeführt wird.

**7.** Getriebe nach einem oder mehreren der Ansprüche 1 bis 6
**dadurch gekennzeichnet,** daß die hydrostatische Bremsanlage (201; 201A) mit einer Regeleinrichtung (214, 215, 203, 204) ausgerüstet ist, die bei geschaltetem Übersetzungs-Festpunkt über entsprechende Steuersignale (214, 215) eine kontinuierliche Verstellung des Hydrostatgetriebes bzw. des stufenlosen Wandlers (4c) bewirkt, derart, daß über den mit der Hydrostateinheit (A) verbundenen Triebstrang (227) oder/und über den mit der zweiten Hydrostateinheit (B) verbundenen Triebstrang (10b) ein das Motorbremsmoment unterstützendes Drehmoment auf die Eingangswelle (1c) des Getriebes bewirkt wird und daß über eine oder beide der genannten Triebstränge (227, 228) Bremsenergie auf den stufenlosen Wandler übertragen und über den Wärmetauscher (205) oder/und zum Energiespeicher (220) geleitet wird.

**8.** Getriebe nach einem oder mehreren der Ansprüche
**dadurch gekennzeichnet,** daß die Bremsregelung bevorzugt über eine elektronische Regeleinrichtung nach Bremsbetätigung über Hand- oder Fußbetätigung über verschiedene Betriebssignale, wie lastabhängiges Signal (e), Motordrehzahlsignal (b) oder/und Füllungssignal bzw. Drosselklappen-Stellungssignal (DW) oder/und Verstellsignal des Wandlers (4c) oder/und Übersetzungssignal des Getriebes oder/und Brems-Drucksignal der Betriebsbremse (f), beeinflußbar bzw. regelbar ist.

**9.** Getriebe nach einem oder mehreren der Ansprüche
**dadurch gekennzeichnet,** daß folgende Bremsfunktionen in bevorzugt nachfolgender Reihenfolge wirksam sind:
a) Bremssignal (f) bewirkt Getriebe-Übersetzungsrückstellung, so daß vorbestimmtes definiertes Motorbremsmoment oder/und Motordrehzahl aufgebaut wird;
b) Regeleinrichtung steuert nächstliegenden bzw. günstigsten Übersetzungs-Festpunkt (KH; KB; KD) an;
c) nach geschaltetem Übersetzungs-Festpunkt erfolgt Hydrostatverstellung zur Unterstützung des Motorbremsmomentes;
d) gegebenenfalls Zuschaltung der Betriebsbremse bzw. Verstärkung des Betriebsbremsanteiles oder/und
e) falls erforderlich weitere Rückregelung auf kleinere Fahrzeuggeschwindigkeit.

**10.** Getriebe nach einem oder mehreren der Ansprüche
**dadurch gekennzeichnet,** daß ein Steuerprogramm für den Bremsbetrieb vorgesehen ist, das die Änderung der Getriebe-Übersetzung von Motor-Bremsmoment bzw. einer definierten Motor-Drehzahl und Schubgeschwindigkeit abhängig macht, derart, daß das Motordrehzahlsignal (b) den Bremsanteil des Retarders (201) oder/und der Betriebsbremse oder/und der E-Speichereinrichtung (201A) bestimmt.

**11.** Getriebe nach einem oder mehreren der Ansprüche
**dadurch gekennzeichnet,** daß im Bremsvorgang während einer Schaltänderung von einem in den anderen Übersetzungs-Festpunkt die Betriebsbremse, automatisch oder manuell betätigt, den Bremsbetrieb ganz oder teilweise in der Übergangsphase übernimmt und daß bei manueller Schaltung ein akuststisches oder optisches Signal den Umschaltzeitpunkt dem Fahrer signalisiert.

**12.** Getriebe nach einem oder mehreren der Ansprüche
**dadurch gekennzeichnet,** daß bei Dauer-Bremsbetrieb eine konstante oder variable Schubgeschwindigkeit oder/und Bremsleistung mit oder ohne automatischer Geschwindigkeitsanpassung einstellbar ist, und daß jeder Motordrehzahl bei Schubbetrieb ein bestimmtes Bremsleistungsverhältnis aus Motorbremse, gegebenenfalls Retarder oder/und E-Speicher und nötigenfalls Betriebsbremse zugeordnet ist.

13. Getriebe nach einem oder mehreren der Ansprüche
**dadurch gekennzeichnet,** daß bei Bergabfahrt eine eingestellte Dauerbrems-Geschwindigkeit ohne Bremsbetätigung haltbar ist und daß für langsamere Geschwindigkeit das Bremspedal erneut betätigt wird und bei gewünschter Geschwindigkeitserhöhung über das Gaspedal ein kontinuierliches Lösen der Bremsanlage mit gleichzeitiger kontinuierlicher stufenloser Veränderung der Getriebeübersetzung verbunden ist, wobei insbesondere bei integriertem Hydrostat-Retarder vorrangig die Motordrehzahl bzw. das Motordrehmoment abgesenkt und ohne Hydrostat-Retarder vorrangig der Betriebsbremsanteil sich verringert.

14. Getriebe nach einem oder mehreren der Ansprüche
**dadurch gekennzeichnet,** daß im Bremsbetrieb eine Übersetzungs-Sperreinrichtung in Richtung höherer Geschwindigkeit wirksam wird mit oder ohne Abhängigkeit zu einer bestimmten Motordrehzahl bzw. zu einem bestimmten Motorbremsmoment, wobei bei Betätigen des Gaspedals zur nachfolgenden Geschwindigkeitserhöhung die Übersetzungs-Sperreinrichtung in Abhängigkeit zur Gaspedalstell-Geschwindigkeit oder/und der Gaspedalstellung sich entsprechend schnell löst bzw. die Übersetzung sich der Gaspedalbewegung entsprechend in Richtung höherer Geschwindigkeit verändert.

15. Getriebe nach einem oder mehreren der Ansprüche
**dadurch gekennzeichnet,** daß eine Hydrostat-Überbrückungseinrichtung bzw. Festpunktschaltung in Form einer Bereichsblockschaltung (KB) vorgesehen ist, derart, daß innerhalb einer Bereichsschaltphase am Ende und zu Beginn zweier benachbarter Schaltbereiche beide Bereichskupplungen für den alten und den neuen Schaltbereich geschlossen bleiben oder/und daß eine weitere Hydrostat-Überbrückungseinrichtung als Stabilisierungseinrichtung (KD) in Form eines Direkt-Durchtriebes vorgesehen ist, die so ausgebildet ist, daß der hydrostatische Wandler (4c) und das Summierungs/Verzweigungsgetriebe (5c) überbrückt und drehmomentfrei gesetzt werden, die in einem oder in mehreren Getriebe-Übersetzungspunkten durch Schließen von wenigstens einer Kupplung (KD) einen Übersetzungspunkt stabil hält solange keine Übersetzungsänderung gefordert wird.

16. Getriebe nach einem oder mehreren der Ansprüche
**dadurch gekennzeichnet,** daß der hydrostatische Wandler (4c) für die Hydrostat-Sperreinrichtung (KH) oder/und Bereichs-Blockschalteinrichtung (KB) oder/und Stabilisier-Einrichtung (KD) mit einem Bypaßventil (114c) ausgestattet ist, das zwischen die Arbeitsdruckleitungen der beiden Hydrostateinheiten A / B geschaltet ist und nach Schließen einer der Kupplungen (KH; KB; KD) automatisch schaltbar ist und beide Druckleitungen kurzschließt.

17. Getriebe nach einem oder mehreren der Ansprüche
**dadurch gekennzeichnet,** daß die Schalteinrichtung für die Übersetzungs-Festpunktschaltung (KH; KB; KD) als Reibkupplung, z.B. als Lamellen- oder Konuskupplung oder als formschlüssige Kupplung mit oder ohne Abweisverzahnung ausgebildet ist, die manuell oder automatisch bei Drehzahl "Null" bzw. im Synchronzustand oder bei geringen Differenzdrehzahlen schaltbar ist, wobei bevorzugt die Hydrostat-Überbrückungseinrichtung (KH; KB; KD) mit einer formschlüssig schaltbaren Kupplung ausgestattet ist, die mittels eines auf einem Kupplungsträger drehfest angeordneten hydraulisch betätigbaren Kolben schaltbar ist, wobei das Kupplungsprofil bevorzugt als Abweisverzahnung ausgebildet ist.

18. Getriebe nach einem oder mehreren der Ansprüche
**dadurch gekennzeichnet,** daß die Hydrostat-Sperreinrichtung (KH) oder/und Bereichs-Blockschalteinrichtung (KB) oder/und Stabilisiereinrichtung (KD) automatisch schaltbar ist, wobei das Schaltsignal in Abhängigkeit eines oder mehrerer Betriebs-Signale - Übersetzungs-Signal, Lastsignal, Motor oder Hydrostat, Übersetzungs-Änderungsgeschwindigkeit u.a. - automatisch ausgelöst wird und daß die automatische Ansteuerung eines Übersetzungsfestpunktes (KH; KB; KD) so programmiert ist, daß sie nach einer definierten Verweildauer der Hydrostateinstellung in der Nähe bzw. im Bereich einer dieser Schaltpunkte bzw. Übersetzungsfestpunkte automatisch ausgelöst wird.

19. Getriebe nach einem oder mehreren der Ansprüche
**dadurch gekennzeichnet,** daß die Kupplung bzw. Bremse (KH) der Hydrostat-Sperreinrichtung mit der Hydrostatwelle (7c) oder einer der Triebwellen, die zwischen Hydrostateinheit (B) und dem Summierungsgetriebe (5c) geschaltet sind, in Wirkverbindung steht.

20. Getriebe nach einem oder mehreren der Ansprüche
**dadurch gekennzeichnet,** daß das Ansteuersignal zum Betätigen des Bypaßventils aus dem Schließvorgang der entsprechenden Bereichskupplung bzw. aus dem Schließvorgang der entsprechenden Hydrostat-Überbrückungseinrichtung resultiert und eine Folgefunktion aus diesen genannten Schaltvorgängen darstellt.

21. Getriebe nach einem oder mehreren der Ansprüche
**dadurch gekennzeichnet,** daß die Übersetzungs-Festpunkt-Schaltung (KH; KB; KD) automatisch gelöst wird durch ein oder mehrere Betriebssignale, wie z.B. Gaspedalsignal, Lastsignal, Hydrostat-drucksignal, Geschwindigkeitsänderungssignal, Bremssignal, Motordrehzahlsignal.

22. Getriebe nach einem oder mehreren der Ansprüche
**dadurch gekennzeichnet,** daß eine Stabilisierungs-Einrichtung durch Schließen einer Kupplung (KD) einen direkten Durchtrieb zwischen Antriebswelle (1c) und Abtriebswelle (2c) herstellt, oder daß die Getriebeantriebswelle (1c) und Getriebeabtriebswelle (2c) koaxial zueinander angeordnet sind und über eine Stabiliesierungs-Einrichtung bei Schließen einer Kupplung (KD; 110) ein rein mechanischer Leistungsfluß über Zahnradstufen (10b) und eine Zwischenwelle (227) erfolgt.

23. Getriebe nach einem der Oberbegriffe der Ansprüche
**dadurch gekennzeichnet,** daß ein Zugkraftverstärker in Form eines Bremselementes (Retarder 77c; Hydrostat-Sperreinrichtung KH)) vorgesehen ist, der mit der Triebwelle (7c) der zweiten Hydrostateinheit (B) direkt oder über Zwischenglieder (73c) in Triebverbindung steht und zur Verstärkung des Stützmomentes auf die zweite Hydrostateinheit (B) im Anfahrbereich des Fahrzeuges dient, wobei der Zugkraftverstärker (77c; KH) manuell oder automatisch bevorzugt über ein Drucksignal des Hydrostatgetriebes oder/und ein Drehzahlsignal oder/und ein Verstellsignal ansteuerbar ist und daß der Zugkraft-Verstärker als Bremselement in Form eines hydrodynamischen Retarders oder elektrischen Retarders oder/und als Reibbremse (77c) ausgebildet ist.

24. Getriebe nach einem oder mehreren der Ansprüche
**dadurch gekennzeichnet,** daß eine Wähleinrichtung vorgesehen ist, die durch Vorwahl ein automatisches Schalten der Hydrostat-Überbrückungseinrichtungen (KH; KB; KD) nach einer festgelegten Charakteristik ermöglicht oder daß durch Einzelwahl die jeweils entsprechende Hydrostat-Überbrükkungs-Einrichtung am betreffenden Betriebspunkt bzw. Übersetzungspunkt manuell ansteuerbar ist, wobei die Ausschaltung bevorzugt automatisch in Abhängigkeit eines oder mehrerer Betriebsparameter bzw. -signale wie Motordrehzahlsignal (b), Lastsignal von Motor oder Hydrostat, Gaspedalsignal (a), Bremssignal (f) erfolgt.

25. Hydrostatisch-mechanisches Leistungsverzweigungsgetriebe, insbesondere für Kraftfahrzeuge mit zwei oder mehreren Schaltbereichen mit einer ersten Hydrostateinheit (A) verstellbaren Volumens und einer zweiten Hydrostateinheit (B), vorzugsweise konstanten Volumens, mit einem Summierungsplanentengetriebe zum Aufsummieren der hydraulischen und mechanischen Leistung und zwei oder mehrere Schaltkupplungen zum Schalten ohne Lastunterbrechung der oben genannten Schaltbereiche, wobei der Bereichswechsel bei Synchrondrehzahl der zu schaltenden Kupplungsglieder erfolgt und die Hydrostateinheiten (A und B) bei jedem Bereichswechsel ihre Funktionen als Pumpe und Motor vertauschen und wobei innerhalb der Schaltphase eine Verstellkorrektur des Hydrostatgetriebes erfolgt
**dadurch gekennzeichnet,** daß die Verstellkorrektur eine Funktion der Hydrostatbelastung am Ende des alten und zu Beginn des neuen Schaltbereiches darstellt und sich größenmäßig verhält nach der Beziehung

V neu = V alt - (V alt - V theor.) . fz

wobei fz ein fester Korrekturfaktor ist und sich größenmäßig verhält nach der Beziehung

$$ fz = \frac{\Delta p\ alt + \Delta p\ neu}{\Delta p\ alt} $$

26. Getrieb nach Anspruch 25
**dadurch gekennzeichnet,** daß die Größe der Verstelkorrektur zusätzlich durch einen Faktor fk veränderbar ist in Abhängigkeit verschiedener Einflußfaktoren wie Öffnungszeitraum der Schaltkupplung oder/und Öltemperatur oder/und Verstellgeschwindigkeit oder/und weitere Betriebsfaktoren, wobei folgende Beziehung Gültigkeit hat

V neu = V alt - (V alt - V theor.) . fz . fk

27. Getriebe nach dem Oberbegriff des Anspruches 25
**dadurch gekennzeichnet,** daß die Verstellkorrektur eine Funktion der Hydrostatbelastung am Ende des alten und zu Beginn des neuen Schaltbereiches darstellt und durch ein Drucksignal p alt des Hydrostatgetriebes (4c) bestimmt wird, wobei die neue Verstellgröße V neu durch ein errechnetes Drucksignal p neu ermittelt wird nach der Beziehung

p neu = p alt . fzp . fk

als Annäherungswert oder genau nach der Beziehung

Δp neu = Δp alt . fzp . fk

wobei fzp einen konstanten in der Getriebeauslegung festgelegten Faktor darstellt, der sich größenmäßig verhält nach der Beziehung

$$\text{fzp} = \frac{\triangle\ \text{p neu}}{\triangle\ \text{p alt}}$$

28. Getriebe nach einem oder mehreren der Oberbegriffe der Ansprüche **dadurch gekennzeichnet,** daß zur Eintellung einer gewünschten Konstantgeschwindigkeit oder Konstantübersetzung die Verstellgeschwindigkeit des Getriebes in bezug auf die Einstellzeit (t) bzw. den Einstellweg (s) bei höherer Fahrzeuggeschwindigkeit bzw. bei größerem Übersetzungswert 1/i größer und bei kleiner Fahrzeuggeschwindigkeit bzw. bei kleinerem Übersetzungswert 1/i kleiner ist (Figur 6d, 6e).

29. Geriebe nach einem oder mehreren der Ansprüche
**dadurch gekennzeichnet,** daß die Bedienungseinrichtung so ausgebildet ist, daß wahlweise ein Overdrive-Bereich bzw. verbrauchsorientiertes Programm ein- und ausschaltbar ist und nach Ausschalten des Overdrive-Bereiches durch weitere Betätigung eine weitere stufenlose Übersetzungsrückstellung stufenlos erfolgt zur weiteren Anhebung der Motordrehzahl, wobei eine automatisch oder durch Bremsbetätigung wirksame Motor-Drehzahl-Limitiereinrichtung den Motor vor unerwünscht hoher Drehzahl oder Übertouren schützt durch manuelle oder automatische Ein- oder Zuschaltung der Bremseinrichtung, z.B. des Hydrostat-Retarders (201) oder/und der Energie-Speichereinrichtung (201A) oder/und der Betriebsbremse (26A), wobei z.B. über das Motordrehzahlsignal (b) oder/und das Bremsbetätigungssignal (f) vorgenannte Bremsfunktionen ausgelöst werden.

30. Getriebe nach einem der Oberbegriffe der Ansprüche
**dadurch gekennzeichnet,** daß eine Bedienungseinrichtung vorgesehen ist, bei der wahlweise die RQV-Regelung, z.B. für Arbeiten mit zugeschaltetem Nebenabtrieb bzw. die Zapfwelle beim Traktor oder die RQ-Regelung für ein verbrauchsorientiertes Programm schaltbar bzw. vorwählbar ist.

31. Getriebe nach einem der Oberbegriffe der Ansprüche
**dadurch gekennzeichnet,** daß ein für verschiedene Fahrsituationen vorgesehenes Fahrprogramm vorgesehen ist, das auf einer Kennlinie beruht, die sich innerhalb einer verbrauchsoptimalen Grenze und einer leistungsoptimalen Grenze stufenlos verschieben läßt, wobei die stufenlose Verschiebung abhängig ist von der Gaspedal-Stellgeschwindigkeit bzw. von der Fahrerdynamik und wobei bei hoher Verstellgeschwindigkeit des Gaspedals die Kennlinie so verschoben ist, daß sich ein höheres Motordrehzahlniveau zugunsten eines höheren Drehmomentüberschusses, das heißt zugunsten höherer Fahrleistung verschiebt im Sinne eines sehr sportilichen, dynamischen Fahrverhaltens und bei langsamer Gaspedalverstellung sich die genannte Kennlinie in Richtung verbrauchsgünstigen Betriebes verschiebt und daß in Abhängigkeit zur Gaspedal-Dynamik ein entsprechend angepaßter mehr oder weniger großer Verzögerungseffekt für eines oder mehrere der Betriebssignale - Motordrehzahlsignal oder/und Rückstellgeschwindigkeit-Übersetzung - zur Wirkung kommt, so daß ein komfortables Beschleunigungsverhalten, insbesondere hinsichtlich Motorgeräusch, sichergestellt ist,
oder daß anstelle der automatischen Kennlinien-Verschiebung alternativ eine manuell betätigbare stufenlose Programmeinstellung, z.B. über Drucktasten oder Wipptasten (3a) oder durch spezielle Gaspedal-Bewegung einstellbar bzw. vorwählbar ist.

32. Getriebe nach einem oder mehreren der Ansprüche
**dadurch gekennzeichnet,** daß die Ein-Aus-Funktion für den Overdrive bzw. das verbrauchsorientierte Programm durch kurzzeitiges Antippen der entsprechenden Beätigungstaste (3a) ausgelöst wird und daß die gewünschte Übersetzungsgröße durch Dauerbetätigung bis zum Erreichen des gewünschten Konstantwertes stufenlos einstellbar ist.

33. Getriebe nach einem der Oberbegriffe der Ansprüche
**dadurch gekennzeichnet,** daß eine bei Berg-Abfahrt nach Betätigen der Bremse wirksame Übersetzungs-Sperreinrichtung vorgesehen ist, wobei die Getriebeübersetzung im Bremsvorgang derart geändert wird, daß eine gezielte Motorbremsung zur Wirkung kommt und daß nach Loslassen des Bremspedals (7) eine Übersetzungssperre in Richtung kleinerer Übersetzung aktiviert und erst nach Betätigen des Fahrpedals (6) die Übersetzungssperre kontinuierlich nach einer vorprogrammierten Charakteristik gelöst wird.

34. Getriebe nach einem oder mehreren der Ansprüche
**dadurch gekennzeichnet,** daß die Bremssteuerung so ausgelegt ist, daß der Bremsbetätigungskraft oder/und dem Betätigungsweg eine definierte Motordrehzahl bzw. ein definiertes Motorbremsmoment zugeordnet ist und daß eine Bremskraft-Aufteilung auf Motorbremse, Betriebsbremse oder/und Retarderbremse nach einem vorbestimmten Programm festgelegt ist (Figur 6h).

35. Getriebe nach einem oder mehreren der Oberbegriffe der Ansprüche **dadurch gekennzeichnet,** daß die Steuer- und Regeleinrichtung so ausgebildet ist, daß die Motorregelung nach Art einer RQV-Regeung bzw. Konstant-Drehzahlregelung funktioniert, wobei jeder Gaspedalstellung (Gaspedalsignal a) bzw. fester Gaseinstellung (z.B. Handgas) eine bestimmte Motordrehzahl (Motordrehzahl-Signal b) zugeordnet ist, wobei eine automatische Fahr- bzw. Geschwindigkeitsregelung derart wirksam wird, daß z.B. bei fester Gaseinstellung bei lastabhängiger Drehzahldrückung um eine vorbestimmte Differenz-Größe ($\Delta$s) automatisch eine Übersetzungsänderung in Richtung kleinerer Geschwindigkeit bewirkt wird, wobei vorzugsweise ein Verzögerungs-Signal zur Vermeidung unerwünschten Motorhochtourens wirksam ist,
oder daß ohne fester Gaseinstellung für normalen Fahrbetrieb Gaspedalsignal und Motordrehzahlsignal miteinander verglichen werden, wobei nach Überschreiten des Motordrehzahl-Signals (b) durch das Gaspedalsignal (a) eine Übersetzungs-Rückstellung ausgelöst wird, wobei Verzögerungs-Signale unerwünschtes Motorhochtouren verhindern (Fig. 6i).

36. Getriebe nach Anspruch 35
**dadurch gekennzeichnet,** daß eine Einrichtung zur stufenlosen Einstellung einer Konstant-Motordrehzahl und einer stufenlosen Einstellung einer Konstant-Geschwindigkeit vorgesehen ist, wobei bei Erreichen der Leistungsgrenze des Motors bei dieser eingestellten Motordrehzahl eine automatische, angepaßte Geschwindigkeitsreduzierung entsprechend dem Vollastzustand bei der vorgewählten Gaseinstellung erfolgt und über die Motordrehzahldrückung ein Signal zur entsprechenden Übersetzungsrückstellung ausgelöst wird.

37. Getriebe, insbesondere nach Anspruch 35 und 36
**dadurch gekennzeichnet,** daß das Bremssignal (f) durch Betätigen des Bremspedals (7) eine Übersetzungs-Rückstellung des Getriebes bewirkt und daß die Anfahrregelung so ausgebildet ist, daß nur bei niedergetretenem Bremspedal (7) die erste Bereichskupplung bzw. Anfahrkupplung nach entsprechender Vorwahl über den Wählhebel (108) schaltbar ist und daß nach Loslassen der Bremse der Anfahrvorgang eingeleitet wird durch Wegnahme des auf das Motordrehzahlsignal (b) in Wirkverbindung stehende Bremssignal (f) (Figur 6i).
oder daß für die Anfahreinrichtung ein Bypaßventil (114c) angesteuert wird, das die beiden Arbeitsdruckleitungen der Hydrostateinheiten (A , B) miteinander verbindet und nach Loslassen der Bremse über eine Steuerleitung (113) die Bypaßfunktion ausschaltet.

38. Einrichtung nach einem oder mehreren der Ansprüche **dadurch gekennzeichnet,** daß die Regeleinrichtung so ausgelegt ist, daß nach manuellem oder automatischem Ausschalten des verbrauchsorientierten Programmes und nach erfolgter Beschleunigungsphase, z.B. bei einem Überholvorgang, automatisch auf das verbrauchsorientierte Fahrprogramm umgeschaltet wird, wobei die genannte Umschaltung mit oder ohne einer zeitlichen Verzögerung erfolgt.

39. Getriebe nach einem oder mehreren der Ansprüche
**dadurch gekennzeichnet,** daß die stufenlose Regeleinrichtung beeinflußt wird durch die Verstellgeschwindigkeit des Gaspedals, durch Drehzahl-Differenzwerte, Vorder- und/oder Hinterräder oder/und aus einem Signal des Fliehkraft-Verhaltens des Fahrzeugs, zum Beispiel bei Kurvenfahrt, wobei die Verstellgeschwindigkeit der stufenlosen Übersetzungs-Änderung durch vorgenannte Einflußgrößen in angepaßtem Maße hinsichtlich Fahrkomfort, Fahrsicherheit, Fahrleistung und/oder Kraftstoffverbrauch entsprechend angepaßt bzw. beschleunigt oder verzögert wird.

40. Getriebe nach einem oder mehreren der Ansprüche
**dadurch gekennzeichnet,** daß der gesamte Overdrive-Bereich in Einzelbereiche aufgeteilt ist oder stufenlose einstellbar ist, wobei für Normalberieb ein kleiner Overdrive-Bereich eingeschatet und bei Sonderbetrieb der große Overdrive-Bereich manuell oder autoatisch in Abhängigkeit von einem oder mehreren Signalen, z.B. einem Zeitsignal oder/und Geschwindigkeits-Signal oder durch Erkennung aus Dauerbetriebs-Verhalten schaltbar ist.

41. Getriebe nach einem der Oberbegriffe vorgenannter Ansprüche **dadurch gekennzeichnet,** daß eine Steuer- und Regeleinrichtung vorgesehen ist, die für Winterbetrieb ein weiches Fahrverhalten im unteren Geschwindigkeitsbereich erlaubt, derart daß der Arbeitsdruck des Hydrostatgetriebes (4c) durch einen Druckregler oder ein Bypaßventil (114c; 216) automatisch oder manuell modulierbar ist, wobei das entsprechende Regelsignal (113) resultiert aus einem oder mehreren der Betriebssignale, Drehzahlsignal (b) oder/und Getriebe-Übersetzungssignal oder/und manuelles Betätigungs-Signal oder/und ein Differenz-Signal aus Drehzahlsignal (b) und Gaspedalsignal (a) oder/und Drosselklappen-stelung.

FIG.1

# FIG.2

# FIG.3

## FIG. 4

FIG. 5

FIG.6a

FIG.6b

FIG.6c

FIG.6d

FIG.6e

FIG. 6f

FIG. 6g

FIG. 6h

FIG. 6i

FIG. 6k

28

## FIG. 7

## FIG. 7a

FIG.8